# EUROPEAN PATENT APPLICATION

(11) **EP 4 797 635 A1**
(43) Date of publication of application: **26.08.2026**
(21) Application number: 24887803.5
(22) Date of filing: 28.10.2024
(51) Int. Cl.: H04L 27/26

(54) **CONFIGURATION METHOD AND COMMUNICATION APPARATUS**

(30) Priority: 07.11.2023 CN 202311477429
(71) Applicant: HUAWEI TECHNOLOGIES CO., LTD., Shenzhen 518129 (CN)
(72) Inventor: WEN, Shan, Shenzhen, Guangdong 518129 (CN); HUANG, Huang, Shenzhen, Guangdong 518129 (CN)
(74) Representative: Pfenning, Meinig & Partner mbB
(86) International application number: PCT/CN2024/127889
(87) International publication number: WO 2025/098190

(57) **Abstract**

This application provides a configuration method and a communication apparatus. The method includes: receiving configuration information from a network device, where the configuration information includes first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter; and demodulating the first signal based on the configuration information, or generating the first signal based on the configuration information. According to this application, average symbol power can be improved, and signal transmission can be ensured.

## Description

This application claims priority to Chinese Patent Application No. 202311477429.5, filed with the China National Intellectual Property Administration on November 7, 2023 and entitled "CONFIGURATION METHOD AND COMMUNICATION APPARATUS", which is incorporated herein by reference in its entirety.

### TECHNICAL FIELD

This application relates to the field of communication technologies, and in particular, to a configuration method and a communication apparatus.

### BACKGROUND

Multipath is a propagation phenomenon in which a radio signal arrives at a receiver through two or more paths. Because a plurality of paths have different propagation distances, the signal arrives at the receiver at different time. A difference between arrival time of a last resolvable delayed signal and arrival time of a first delayed signal is termed as a maximum delay spread (maximum delay spread, MDS).

When a signal is transmitted through a multipath channel, interference is generated due to mutual overlapping of the same signal at a receiving station during multipath propagation, which is referred to as inter-symbol interference (inter-symbol interference, ISI). For ISI, a guard interval (for example, a cyclic prefix (cyclic prefix, CP)) may be added before an orthogonal frequency division multiplexing (orthogonal frequency division multiplexing, OFDM) symbol is sent over a channel. Theoretically, impact of ISI can be completely eliminated provided that the guard interval is greater than an MDS of the channel.

To flexibly configure a length of the CP based on user requirements, the CP may be flexibly configured by using a replication block, adding a unique word (unique word, UW) signal, or puncturing (puncture) a tail part of a previous symbol, or interference caused by the MDS exceeding the length of the CP may be reduced by using a zero head (zero head, ZH) and/or a zero tail (zero tail, ZT). However, the use of these approaches may cause reduction of average symbol power, thereby affecting signal transmission.

### SUMMARY

This application provides a configuration method and a communication apparatus. According to the method described in this application, average symbol power can be improved, and signal transmission can be ensured.

According to a first aspect, this application provides a configuration method. The method includes: receiving configuration information from a network device, where the configuration information includes first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter; and demodulating the first signal based on the configuration information, or generating the first signal based on the configuration information.

According to the method described in the first aspect, power increasing is performed on non-zero signals in some symbols in the first signal, to increase average symbol power, thereby ensuring signal transmission and improving demodulation performance. In a specific process, the network device needs to send the configuration information to the terminal device. The configuration information may be used to determine symbols on which power increasing is performed in the first signal and a quantity of zero data of component signals in these symbols, so that the first signal is demodulated or modulated in a corresponding manner. This can improve demodulation performance without affecting channel estimation and equalization.

In a possible implementation, the guard interval configuration manner of the first signal is a first guard interval configuration manner, the first signal includes a first symbol and a second symbol, the first symbol is a symbol immediately preceding the second symbol, and the second symbol includes a zero head ZH signal and/or a zero tail ZT signal. In the first guard interval configuration manner, a first parameter corresponding to the second symbol indicates a quantity of zero data of the ZH signal and/or the ZT signal in the second symbol. According to this manner, inter-symbol interference can be avoided, and average symbol power can be increased in the first guard interval configuration manner, to ensure signal transmission.

In a possible implementation, the first signal further includes a third symbol, the third symbol is a symbol immediately preceding the first symbol, the third symbol includes a ZH signal, and a tail signal in the third symbol is replaced with a component signal in the first symbol. In the first guard interval configuration manner, a first parameter corresponding to the third symbol indicates a quantity of zero data of the ZH signal in the third symbol. According to this manner, inter-symbol interference can be avoided, and average symbol power can be increased in the first guard interval configuration manner, to ensure signal transmission.

In a possible implementation, the first symbol is any one of the following symbols: demodulation reference signal DMRS, channel state information-reference signal CSI-RS, physical downlink control channel PDCCH, physical uplink control channel PUCCH, channel sounding reference signal SRS, synchronization signal block SSB, and ultra-reliable low-latency communication URLLC.

In a possible implementation, the guard interval configuration manner of the first signal is a second guard interval configuration manner, each symbol in the first signal includes a first replication block and a second replication block, the first signal includes a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal. An end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol. In the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol. According to this manner, average symbol power can be increased in the second guard interval configuration manner, to ensure signal transmission.

In a possible implementation, the first signal includes a sixth symbol and a seventh symbol, the sixth symbol is a symbol immediately preceding the seventh symbol, and the sixth symbol is a 1^{st} symbol in the first signal. An end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol. In the second guard interval configuration manner, if the second replication block of the sixth symbol is a zero signal, a first parameter corresponding to the sixth symbol indicates a quantity of zero data of the first replication block and the second replication block of the sixth symbol. According to this manner, average symbol power can be increased in the second guard interval configuration manner, to ensure signal transmission.

In a possible implementation, the sixth symbol further includes a ZH signal, and the first parameter corresponding to the sixth symbol further indicates a quantity of zero data of the ZH signal in the sixth symbol. According to this manner, inter-symbol interference can be further avoided, and average symbol power can be increased in the second guard interval configuration manner, to ensure signal transmission.

In a possible implementation, the first signal includes an eighth symbol and a ninth symbol, the eighth symbol is a symbol immediately preceding the ninth symbol, and the ninth symbol is a last symbol in the first signal. An end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol. In the second guard interval configuration manner, if the first replication block of the ninth symbol is a zero signal, a first parameter corresponding to the ninth symbol indicates a quantity of zero data of the first replication block and the second replication block of the ninth symbol. According to this manner, average symbol power can be increased in the second guard interval configuration manner, to ensure signal transmission.

In a possible implementation, the ninth symbol further includes a ZH signal and/or a ZT signal, and the first parameter corresponding to the ninth symbol further indicates a quantity of zero data of the ZH signal and/or the ZT signal in the ninth symbol. According to this manner, inter-symbol interference can be further avoided, and average symbol power can be increased in the second guard interval configuration manner, to ensure signal transmission.

In a possible implementation, the guard interval configuration manner of the first signal is a third guard interval configuration manner, a tenth symbol is any symbol in the first signal, the tenth symbol includes a tail unique word UW signal, and an end position of the tail UW signal in the tenth symbol is an end position of the tenth symbol. In the third guard interval configuration manner, if the tail UW signal is a zero signal, a first parameter corresponding to the tenth symbol indicates a quantity of zero data of the tail UW signal in the tenth symbol. According to this manner, average symbol power can be increased in the third guard interval configuration manner, to ensure signal transmission.

In a possible implementation, the tenth symbol further includes a head UW signal, and a start position of the head UW signal in the tenth symbol is a start position of the tenth symbol. If the head UW signal is a zero signal, the first parameter corresponding to the tenth symbol further indicates a quantity of zero data of the head UW signal in the tenth symbol. According to this manner, inter-symbol interference can be further avoided, and average symbol power can be increased in the third guard interval configuration manner, to ensure signal transmission.

In a possible implementation, generating the first signal based on the configuration information includes: processing, based on the first parameter, first data corresponding to the symbol, to obtain second data corresponding to the symbol, where the first data is input data of discrete Fourier transform DFT, and the second data is output data of DFT; and processing the second data corresponding to the symbol, to obtain the first signal, where the symbol includes the second symbol and/or the third symbol; or the symbol includes one or more of the following symbols: the fourth symbol, the fifth symbol, the sixth symbol, and the ninth symbol; or the symbol includes the tenth symbol. According to this manner, average symbol power can be improved, demodulation performance can be improved, and signal transmission can be ensured.

In a possible implementation, demodulating the first signal based on the configuration information includes: processing the first signal to obtain second data corresponding to the symbol, where the second data is output data of DFT; and processing, based on the first parameter, the second data corresponding to the symbol, to obtain first data corresponding to the symbol, where the first data is input data of DFT, and the symbol includes the second symbol and/or the third symbol; or the symbol includes one or more of the following symbols: the fourth symbol, the fifth symbol, the sixth symbol, and the ninth symbol; or the symbol includes the tenth symbol. According to this manner, average symbol power can be improved, demodulation performance can be improved, and signal transmission can be ensured.

In a possible implementation, the amplitude scale factor of the first data is $\sqrt{\frac{M}{M - {N}_{0}}}$, where *M* is the size of DFT, and *N*₀ is the first parameter corresponding to the symbol.

According to a second aspect, this application provides a configuration method. The method includes: sending configuration information to a terminal device, where the configuration information includes first indication information and a first parameter that corresponds to a symbol of a first signal, the first indication information indicates a guard interval configuration manner of the first signal, the first parameter indicates a quantity of zero data in a component signal, and the component signal is located in the symbol corresponding to the first parameter; and receiving the first signal from the terminal device, where the first signal is generated based on the configuration information.

For beneficial effects of the possible implementations of the second aspect, refer to the beneficial effects of the possible implementations of the first aspect. Details are not described herein again.

In a possible implementation, the guard interval configuration manner of the first signal is a first guard interval configuration manner, the first signal includes a first symbol and a second symbol, the first symbol is a symbol immediately preceding the second symbol, and the second symbol includes a zero head ZH signal and/or a zero tail ZT signal. In the first guard interval configuration manner, a first parameter corresponding to the second symbol indicates a quantity of zero data of the ZH signal and/or the ZT signal in the second symbol.

In a possible implementation, the first signal further includes a third symbol, the third symbol is a symbol immediately preceding the first symbol, the third symbol includes a ZH signal, and a tail signal in the third symbol is replaced with a component signal in the first symbol. In the first guard interval configuration manner, a first parameter corresponding to the third symbol indicates a quantity of zero data of the ZH signal in the third symbol.

In a possible implementation, the first symbol is any one of the following symbols: demodulation reference signal DMRS, channel state information-reference signal CSI-RS, physical downlink control channel PDCCH, physical uplink control channel PUCCH, channel sounding reference signal SRS, synchronization signal block SSB, and ultra-reliable low-latency communication URLLC.

In a possible implementation, the guard interval configuration manner of the first signal is a second guard interval configuration manner, each symbol in the first signal includes a first replication block and a second replication block, the first signal includes a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal. An end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol. In the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

In a possible implementation, the first signal includes a sixth symbol and a seventh symbol, the sixth symbol is a symbol immediately preceding the seventh symbol, and the sixth symbol is a 1^{st} symbol in the first signal. An end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol. In the second guard interval configuration manner, if the second replication block of the sixth symbol is a zero signal, a first parameter corresponding to the sixth symbol indicates a quantity of zero data of the first replication block and the second replication block of the sixth symbol.

In a possible implementation, the sixth symbol further includes a ZH signal, and the first parameter corresponding to the sixth symbol further indicates a quantity of zero data of the ZH signal in the sixth symbol.

In a possible implementation, the first signal includes an eighth symbol and a ninth symbol, the eighth symbol is a symbol immediately preceding the ninth symbol, and the ninth symbol is a last symbol in the first signal. An end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol. In the second guard interval configuration manner, if the first replication block of the ninth symbol is a zero signal, a first parameter corresponding to the ninth symbol indicates a quantity of zero data of the first replication block and the second replication block of the ninth symbol.

In a possible implementation, the ninth symbol further includes a ZH signal and/or a ZT signal, and the first parameter corresponding to the ninth symbol further indicates a quantity of zero data of the ZH signal and/or the ZT signal in the ninth symbol.

In a possible implementation, the guard interval configuration manner of the first signal is a third guard interval configuration manner, a tenth symbol is any symbol in the first signal, the tenth symbol includes a tail unique word UW signal, and an end position of the tail UW signal in the tenth symbol is an end position of the tenth symbol. In the third guard interval configuration manner, if the tail UW signal is a zero signal, a first parameter corresponding to the tenth symbol indicates a quantity of zero data of the tail UW signal in the tenth symbol.

In a possible implementation, the tenth symbol further includes a head UW signal, and a start position of the head UW signal in the tenth symbol is a start position of the tenth symbol. If the head UW signal is a zero signal, the first parameter corresponding to the tenth symbol further indicates a quantity of zero data of the head UW signal in the tenth symbol.

In a possible implementation, the method further includes: processing the first signal to obtain second data corresponding to the symbol, where the second data is output data of discrete Fourier transform DFT; and processing, based on the first parameter, the second data corresponding to the symbol, to obtain first data corresponding to the symbol, where the first data is input data of DFT, and the symbol includes the second symbol and/or the third symbol; or the symbol includes one or more of the following symbols: the fourth symbol, the fifth symbol, the sixth symbol, and the ninth symbol; or the symbol includes the tenth symbol.

In a possible implementation, the amplitude scale factor of the first data is $\sqrt{\frac{M}{M - {N}_{0}}}$, where *M* is the size of DFT, and *N*₀ is the first parameter corresponding to the symbol.

According to a third aspect, this application provides a communication apparatus. The communication apparatus includes a processor. When the processor invokes a computer program in a memory, the method according to the first aspect or the second aspect is performed.

According to a fourth aspect, this application provides a communication apparatus. The communication apparatus includes a processor and a memory, the processor is coupled to the memory, and the processor is configured to implement the method according to the first aspect or the second aspect.

According to a fifth aspect, this application provides a communication apparatus. The communication apparatus includes a processor, a memory, and a transceiver, the processor is coupled to the memory, the transceiver is configured to receive and send data, and the processor is configured to implement the method according to the first aspect or the second aspect.

According to a sixth aspect, this application provides a chip. The chip includes a processor and an interface, the processor is coupled to the interface, the interface is configured to receive or output a signal, and the processor is configured to execute code instructions, so that the method according to the first aspect or the second aspect is performed.

According to a seventh aspect, this application provides a computer-readable storage medium. The storage medium stores a computer program or instructions; and when the computer program or the instructions are executed by a communication apparatus, the method according to the first aspect or the second aspect is implemented.

According to an eighth aspect, this application provides a communication system. The communication system includes a terminal device and a network device. The terminal device is configured to perform the method according to the first aspect, and the network device is configured to perform the method according to the second aspect.

According to a ninth aspect, this application provides a computer program product including instructions. When a computer reads and executes the computer program product, the computer is caused to perform the method according to the first aspect or the second aspect.

### BRIEF DESCRIPTION OF DRAWINGS

FIG. 1 is a diagram of a communication system according to an embodiment of this application;
FIG. 2 is a diagram of multipath propagation (a transmitted signal arrives at a receiver through two paths) according to an embodiment of this application;
FIG. 3 is a diagram of adding a cyclic prefix (CP) according to an embodiment of this application;
FIG. 4 is a diagram of forward shifting of a position of an FFT window according to an embodiment of this application;
FIG. 5A(a) to FIG. 5A(c) are diagrams of a flexible CP length configuration solution 1 according to an embodiment of this application;
FIG. 5B is a diagram of a replication block of a symbol according to an embodiment of this application;
FIG. 5C is a diagram of a flexible CP length configuration solution 2 according to an embodiment of this application;
FIG. 5D(a) and FIG. 5D(b) are diagrams of a flexible CP length configuration solution 3 according to an embodiment of this application;
FIG. 5E(a) to FIG. 5E(c) are diagrams of a ZH signal and/or a ZT signal in a symbol according to an embodiment of this application;
FIG. 6 is a schematic flowchart of a configuration method according to an embodiment of this application;
FIG. 7 is a diagram of power increasing of a symbol in a first guard interval configuration manner according to an embodiment of this application;
FIG. 8A is a diagram of power increasing of a symbol in a second guard interval configuration manner according to an embodiment of this application;
FIG. 8B is another diagram of power increasing of a symbol in a second guard interval configuration manner according to an embodiment of this application;
FIG. 8C is another diagram of power increasing of a symbol in a second guard interval configuration manner according to an embodiment of this application;
FIG. 8D is another diagram of power increasing of a symbol in a second guard interval configuration manner according to an embodiment of this application;
FIG. 8E is another diagram of power increasing of a symbol in a second guard interval configuration manner according to an embodiment of this application;
FIG. 8F is another diagram of power increasing of a symbol in a second guard interval configuration manner according to an embodiment of this application;
FIG. 9A is a diagram of power increasing of a symbol in a third guard interval configuration manner according to an embodiment of this application;
FIG. 9B is another diagram of power increasing of a symbol in a third guard interval configuration manner according to an embodiment of this application;
FIG. 10 is a curve diagram of demodulation BLER performance of a symbol with power increasing and without power increasing according to an embodiment of this application;
FIG. 11 is a schematic flowchart of another configuration method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a chip according to an embodiment of this application.

### DESCRIPTION OF EMBODIMENTS

The terms "first", "second", and the like in the specification, claims, and accompanying drawings of this application are used to distinguish between different objects, but are not used to describe a specific sequence. In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiment" mentioned in this specification means that a particular characteristic, structure, or feature described with reference to embodiments may be included in at least one embodiment of this application. The phrase shown at various positions in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of' means two or more, "at least two (items)" means two, three, or more, and "and/or" is used to describe a correspondence relationship between associated objects, and indicates that three relationships may exist. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems such as a satellite communication system and a conventional mobile communication system. The satellite communication system may be integrated with the conventional mobile communication system (namely, a terrestrial communication system). The mobile communication systems are, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and another future communication system like a 6th generation (6th generation, 6G) system. The communication systems further support a communication system that integrates a plurality of wireless technologies. For example, the communication systems may be further used in a system that integrates a terrestrial mobile communication network and a non-terrestrial network (non-terrestrial network, NTN) such as an uncrewed aerial vehicle, a satellite communication system, or a high altitude platform station (high altitude platform station, HAPS) communication system. It may be understood that the system architecture described in embodiments of this application is intended to describe the technical solutions in embodiments of this application more clearly, and does not constitute a limitation on the technical solutions provided in embodiments of this application.

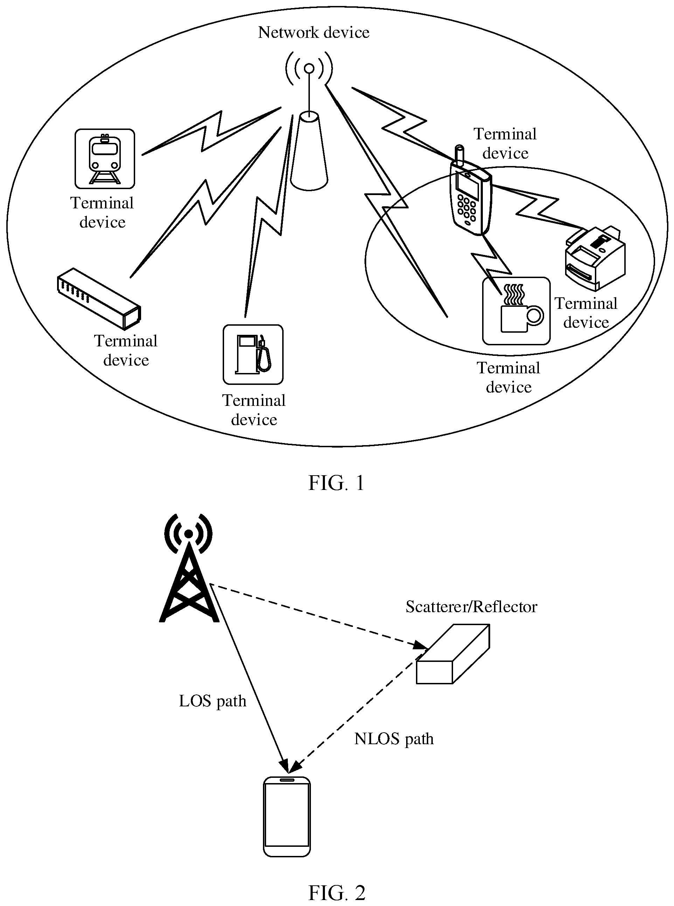

FIG. 1 is a diagram of a communication system to which an embodiment of this application is applicable. The communication system includes at least one network device and at least one terminal device. In FIG. 1, one network device and a plurality of terminal devices are used as an example. The plurality of terminal devices may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in a wireless communication system. All of the terminal devices may be connected to the network device. All of the terminal devices can communicate with the network device. In addition, communication, for example, device-to-device (device-to-device, D2D) transmission, may also be performed between terminal devices. Certainly, a quantity of terminal devices and a quantity of network devices in FIG. 1 are merely an example, and there may alternatively be more or fewer terminal devices and more or fewer network devices. The following separately describes in detail the terminal device and the network device in the communication system in FIG. 1.

### 1. Terminal device

The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a PDA, a handheld device having a wireless communication function, a computing device or another processing device connected to the wireless modem, a vehicle-mounted device, a communication device mounted on a high-altitude aircraft, a wearable device, an uncrewed aerial vehicle, a robot, a terminal in D2D communication, a terminal in vehicle-to-everything (vehicle-to-everything, V2X) communication, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application. In addition, in this application, unless otherwise specified, the "terminal device" may be the terminal device itself, or may be a component of the terminal device, for example, a chip system or an SoC. The component may be installed in the terminal device.

### 2. Network device

The network device mentioned in embodiments of this application has a wireless transceiver function, is configured to communicate with a terminal, and may be specifically a base station (base station), an evolved NodeB (evolved NodeB, eNodeB), a transmission-reception point (transmission-reception point, TRP), a next generation NodeB (next generation NodeB, gNB) in a 5G mobile communication system, a next generation base station in a 6th generation (6th generation, 6G) mobile communication system, an access network device or a module of an access network device in an open access network (open RAN, ORAN) system, a base station in a future mobile communication system, an access node in a Wi-Fi system, or the like. The network device may alternatively be a module or a unit that can implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. For example, the base station in embodiments of this application may include various forms of base stations, for example, a macro base station, a micro base station (also referred to as a small cell), a relay station, an access point, a gNodeB (gNodeB, gNB), a transmitting and receiving point (transmitting and receiving point, TRP), a transmitting point (transmitting point, TP), and a mobile switching center. Alternatively, the base station may be a device or the like that undertakes a wireless access function in device-to-device (Device-to-Device, D2D) communication, vehicle-to-everything (vehicle-to-everything, V2X) communication, machine-to-machine (machine-to-machine, M2M) communication, or internet of things (Internet of Things) communication. In addition, in this application, unless otherwise specified, the "network device" may be the network device itself, or may be a component of the network device, for example, a chip system or a system-on-a-chip (system-on-a-chip, SOC). The component may be installed in the network device.

To facilitate understanding of the solutions provided in embodiments of this application, the following describes related concepts in embodiments of this application.

1. Channel (channel), multipath (multipath), and maximum delay spread (maximum delay spread, MDS)

In a radio system, a medium through which a signal is transmitted from a transmitter to a receiver is referred to as a channel. Multipath is a propagation phenomenon in which a radio signal arrives at a receiver through two or more paths. Causes of multipath include atmospheric duct, ionospheric reflection and refraction, and reflection from water and land objects (such as mountains and buildings). FIG. 2 is a diagram of multipath propagation (a transmitted signal arrives at a receiver through two paths). In FIG. 2, a signal sent by a network device may arrive at a terminal device through a line of sight (line of sight, LOS) path and a non-line of sight (Non-Line of Sight, NLOS) path. The LOS path is a straight line path between the terminal device and the network device. The NLOS path is a path in which the straight line path for signal transmission between the terminal device and the network device is blocked due to the existence of an obstacle in a radio transmission environment, and radio waves are transmitted in a non-line of sight propagation manner like reflection, refraction, and diffraction.

Because these signals propagate different distances on a plurality of paths, the signals arrive at the receiver at different time. A difference between time at which a signal arrives at the receiver through a first path and time at which the signal arrives at the receiver through a last path is referred to as a maximum delay spread (maximum delay spread, MDS).

### 2. Orthogonal frequency division multiplexing (orthogonal frequency division multiplexing, OFDM) and cyclic prefix (cyclic prefix, CP)

OFDM is a high-speed data transmission manner. Its basic idea is to divide a given channel into a plurality of sub-channels in frequency domain, and the sub-channels are orthogonal to each other. A high-speed data stream is allocated to the plurality of orthogonal sub-channels for transmission. In this way, a rate of symbols on the sub-channels is greatly reduced, and duration of a single data symbol is greatly prolonged, thereby providing a strong anti-delay spread capability. OFDM is a type of multicarrier modulation (multicarrier modulation, MCM) technology. The basic idea of multicarrier modulation is to convert a data stream into N low-rate sub-data streams through serial-to-parallel conversion, and then respectively modulate N subcarriers by using these sub-data streams, for parallel transmission. Because a rate of the sub-data stream is 1/N of an original rate, in other words, a symbol periodicity is expanded to N times of an original symbol periodicity, which is much greater than a maximum delay spread of a channel, the multicarrier modulation is to divide a wideband frequency selective channel into N narrowband flat fading channels. In this way, equalization is simple, and therefore, multicarrier modulation has strong anti-multipath fading and anti-pulse interference capabilities, which is particularly suitable for high-speed wireless data transmission. OFDM is a type of multicarrier modulation in which subcarriers are overlapped with each other. Therefore, in addition to the advantages of the foregoing multicarrier modulation, OFDM further has higher spectrum utilization. In OFDM, subcarriers that are orthogonal to each other in time domain are selected. Although the subcarriers are overlapped with each other in the frequency domain, the subcarriers can still be separated on a receiving side.

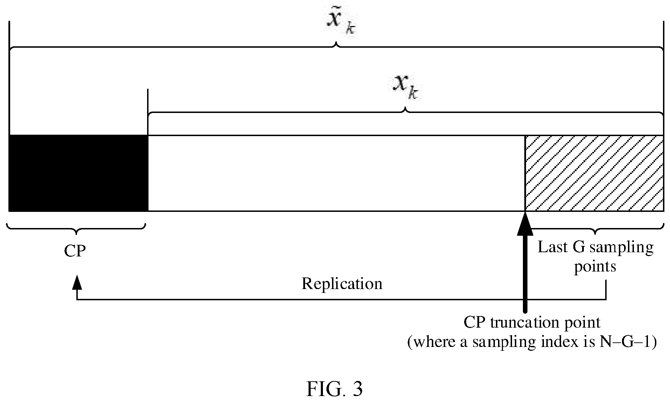

In an OFDM system, when a signal is transmitted through a multipath channel, interference is generated due to mutual overlapping of the same signal at a receiving station during multipath propagation, which is referred to as inter-symbol interference (inter-symbol interference, ISI). Therefore, for ISI, a guard interval (for example, a CP) may be added before an OFDM symbol is sent to the channel. Theoretically, impact of ISI can be completely eliminated provided that the guard interval is greater than an MDS of the channel. The guard interval is obtained by adding the CP to a start position of the symbol. As shown in FIG. 3, one OFDM symbol *x̃ₖ* includes valid data *xₖ* and a CP (redundant data). A specific implementation process is as follows: replicating last G sampling points of *xₖ*, and adding the last G sampling points to a start position of *xₖ* , to obtain a time-domain OFDM symbol *x̃ₖ =* [*xₖ*[*N - G],..., xₖ*[*N -* 1], *xₖ*[0]*, xₖ*[1]*, ..., xₖ*[*N -* 1]]*^{T}.* It may be understood that the CP is equal to the last G sampling points of *xₖ* (namely, *xₖ*[*N - G*],...,*xₖ*[*N - 1]).* A sampling index corresponding to a CP truncation point is N-G-1, in other words, a next sampling point of the CP truncation point is equal to a first sampling point of the CP.

On the receiving side, an OFDM signal can be demodulated through inverse processing. It is assumed that time and frequency synchronization can be achieved and a CP length is not less than the MDS. After the CP is removed (to be specific, first G sampling points in the received OFDM signal are removed), a data block including N sampling points without ISI can be obtained, and the data block is equal to a cyclic convolution of *xₖ* and channel impulse response. A time-domain cyclic convolution may be transformed into frequency-domain point multiplication through fast Fourier transform (fast Fourier transform, FFT), and then channel equalization may be completed with low complexity through frequency-domain single-tap equalization.

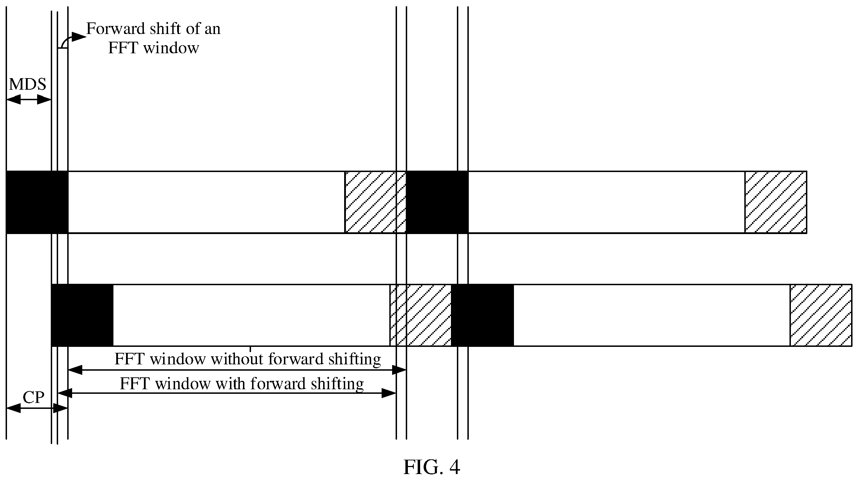

There may be a timing synchronization error in an actual link. To minimize negative impact of ISI in the case of the timing error, the receiver usually shifts a position of an FFT window on the receiving side forward, as shown in FIG. 4. A forward shift is usually 10% to 20% of the CP length. That is, when there is no timing error, the CP length is effectively decreased by 10% to 20%. If a sum of the MDS and the forward shift of the FFT window exceeds the CP length, the symbol is also affected by ISI. In embodiments of this application, that the CP is exceeded or the CP is not enough (insufficient) may be understood as that the channel MDS exceeds the CP, or that a sum of the channel MDS and the timing synchronization error exceeds the CP. In summary, ISI can be avoided and a linear convolution of the channel can be transformed into the cyclic convolution only when the CP length is sufficient, so that frequency-domain channel equalization with low complexity can be enabled.

### 3. Discrete Fourier transform spreading orthogonal frequency division multiplexing (discrete Fourier transform spreading OFDM, DFT-s-OFDM)

DFT-s-OFDM defines a data block *sₖ* transmitted in time domain. Before an OFDM process, there is an additional discrete Fourier transform (discrete Fourier transform, DFT) process, to be specific, an M-point DFT operation is performed on each data block *sₖ* including M pieces of data. Through this operation, a DFT-s-OFDM signal has a single carrier characteristic, and has a peak to average power ratio (peak to average power ratio, PAPR) that is much lower than that of a multicarrier signal like an OFDM signal. Therefore, with same power amplification, DFT-s-OFDM may provide higher output power and higher power amplification efficiency, thereby improving coverage and reducing energy consumption.

*sₖ* may include a modulation symbol and/or a redundant signal sampling point. The modulation symbol may be a modulation symbol obtained by modulating a (coded) bit stream. A modulation scheme may include pulse amplitude modulation (pulse amplitude modulation, PAM), phase shift keying (phase shift keying, PSK), quadrature amplitude modulation (quadrature amplitude modulation, QAM), offset quadrature amplitude modulation (offset quadrature amplitude modulation, OQAM), amplitude phase shift keying (amplitude phase shift keying, APSK), and the like.

The redundant signal sampling point may include a phase tracking reference signal (phase tracking reference signal, PTRS) sampling point, a unique word (unique word, UW), zero, and the like.

### 4. Time-domain linear convolution single carrier (single carrier, SC) modulation

In time-domain linear convolution SC modulation, a data sequence (data sequence) is shaped and filtered to generate a signal x. Shaping and filtering herein include two processes: upsampling (upsampling) and filtering (namely, linear convolution of an upsampled signal and a shaping pulse).

The data sequence includes a modulation symbol and/or a redundant signal sampling point. The modulation symbol may be a modulation symbol obtained by modulating a (coded) bit stream. A modulation scheme may include PAM, PSK, QAM, OQAM, APSK, and the like. The redundant signal sampling point may include a PTRS sampling point, a UW, zero, and the like.

In DFT-s-OFDM, an upsampling factor is $\frac{N}{M}$, and the shaping pulse has a periodicity, where the periodicity is N. Therefore, the DFT-s-OFDM signal *xₖ* may be understood as a cyclic convolution of the data block *sₖ* and the shaping pulse.

### 5. Single carrier-frequency domain equalization (single carrier-frequency domain equalization, SC-FDE)

Based on time-domain linear convolution SC modulation, SC-FDE is to first divide a data sequence into a series of data blocks *sₖ* with lengths of M through a partition (partition) module. A CP with a length of Q is added to each data block, to be specific, last Q pieces of data of *sₖ* are replicated to the front of *sₖ* (in this case, a CP truncation point corresponds to a data index M-Q-1). Due to the CP, a linear convolution of a multipath channel is transformed into a cyclic convolution, and the receiver may use low-complexity single-tap frequency domain channel equalization.

### 6. CP length

An NR protocol supports two types of CP lengths: normal CP (NCP) and extended CP (ECP). An overhead of the NCP is approximately 144/(2048+144)=6.6%, and an overhead of the ECP is approximately 512/(512+2048)=20%. Therefore, the overhead of the ECP is much higher than the overhead of the NCP.

Currently, a CP is configured at a cell level, to be specific, all users in the cell are configured with a same CP length. If an MDS in the cell is less than the NCP, all the users in the cell are configured with the NCP. If an MDS in the cell is greater than the NCP, all the users in the cell are configured with the ECP. However, this may cause spectrum effectiveness losses for some users in the cell, and even the MDS may exceed the CP. For example, an MDS of a user corresponds to 20 sampling values, while a valid data part of an OFDM/DFT-s-OFDM symbol contains 2048 sampling values. According to a minimum CP overhead principle, a CP length of 20 can avoid ISI and ICI. However, in a case of cell-level CP configuration, an NCP length needs to be configured, and the NCP length is 144, which causes a spectrum effectiveness loss.

To flexibly configure the CP length based on user requirements, the following three solutions may be used.

### Solution 1: Flexibly configure the CP length based on a replication block

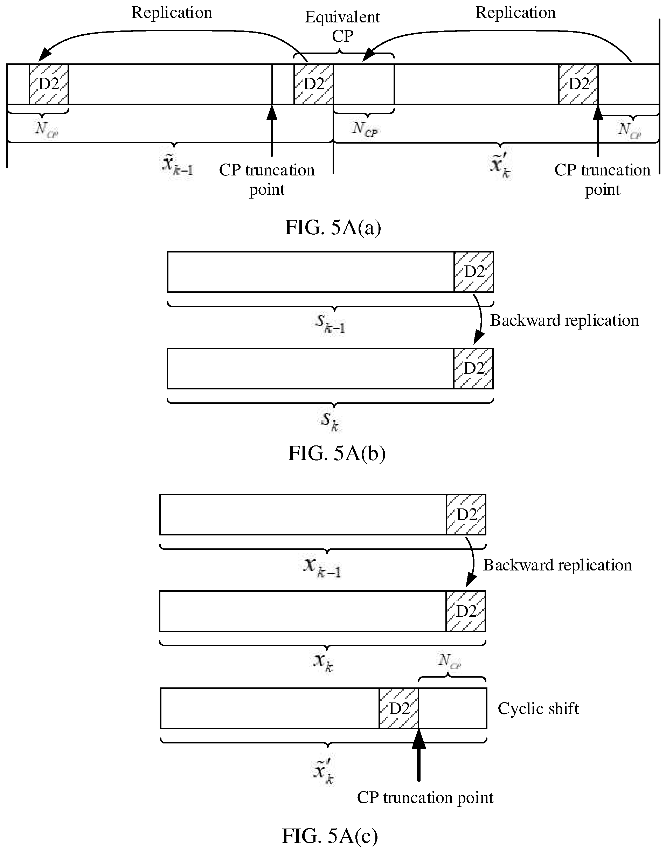

Solution 1 is applicable to a single carrier waveform, for example, a DFT-s-OFDM waveform and a time-domain linear convolution SC waveform. The replication block is a replicated data block. The following describes the technical effect of the solution with reference to FIG. 5A(a) to FIG. 5A(c) by using the DFT-s-OFDM waveform as an example. FIG. 5A(a) shows two DFT-s-OFDM symbols (including CPs (NCP or ECP)) that are sent in serial, which are respectively denoted as *x̃*_{*k-*1} and ${{x}^{˜}}_{k}^{′}$*,* where a subscript "k" represents a symbol index. A D2 part signal (whose end position is an end position of *x̃*_{*k-*1}) of *x̃*_{*k-*1} is the same as a D2 part (whose end position is the CP truncation point) of ${{x}^{˜}}_{k}^{′}$*.* It should be understood that the same herein does not necessarily mean absolute same, and may also mean approximately same.

A specific implementation process is as follows. Before DFT, as shown in FIG. 5A(b), forward/backward replication is performed on two adjacent data blocks whose lengths are M and that are assumed to be respectively denoted as s_{*k-*1} and *sₖ.* Backward replication is used as an example. Last ${N}_{t}^{pre - DFT}$ pieces of data (namely, the D2 part) of *sₖ* are replaced with last ${N}_{t}^{pre - DFT}$ pieces of data of *s*_{*k-*1}*.* Then, as shown in FIG. 5A(c), after IFFT output, cyclic shifting is first performed, and then a CP is added. For example, *N_{CP}*-point cyclic shifting is performed on *xₖ* to obtain ${{x}^{˜}}_{k}^{′}$*.* Shifting is not performed on *xₖ,* and a CP is added to obtain *x̃*_{*k*-1}. In this case, a result shown in FIG. 5A(a) is obtained.

Based on this manner, before single carrier modulation, the D2 part of *x̃*_{*k-*1} may be used as a supplementary CP (supplementary CP, SCP) of ${{x}^{˜}}_{k}^{′}$*,* and an equivalent CP length of ${{x}^{˜}}_{k}^{′}$ is equal to a sum of a CP length (namely, *N_{CP}*) and an SCP length (namely, a length of the D2 part). A D2 part signal may be referred to as a replication block, and the equivalent CP length may be flexibly configured by adjusting a length of the replication block. Optionally, performing cyclic shifting on an IFFT output in time domain may also be equivalent to performing phase compensation on the IFFT input in frequency domain.

The replication block may be the foregoing last ${N}_{t}^{pre - DFT}$ pieces of data (namely, the D2 part) of *s*_{*k*-1}*,* and may be random data or determined data, or may be a combination of random data and determined data. The random data may be, for example, communication data, and both *x̃*_{*k*-1} and ${{x}^{˜}}_{k}^{′}$ are data DFT-s-OFDM symbols. The determined data may be, for example, a PTRS sampling point, a DMRS sampling point, or a UW. It should be specially noted that, to follow a DMRS signal design in NR, for a DMRS, only forward replication can be performed on a previous symbol adjacent to the DMRS, or only backward replication can be performed on a next symbol adjacent to the DMRS.

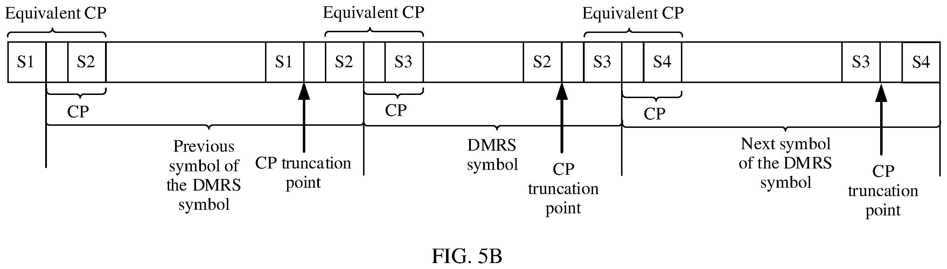

When a plurality of (more than three) symbols are considered and a length of the replication block is less than the CP length, each symbol has two replication blocks, which may be denoted as a first replication block and a second replication block. An end position of the first replication block is a CP truncation point, and an end position of the second replication block is an end position of the symbol. For example, in the previous symbol of the DMRS symbol in FIG. 5B, the first replication block is S1, and the second replication block is S2; in the DMRS symbol, the first replication block is S2, and the second replication block is S3; and in the next symbol of the DMRS symbol, the first replication block is S3, and the second replication block is S4. The second replication block S2 of the previous symbol of the DMRS symbol is the same as the first replication block S2 of the DMRS symbol, and the first replication block S3 of the next symbol of the DMRS symbol is the same as the second replication block S3 of the DMRS symbol.

### Solution 2: Flexibly configure the CP length based on a unique word (UW) signal

Solution 2 is applicable to a single carrier waveform, for example, a DFT-s-OFDM waveform or a time-domain linear convolution SC waveform, and is also applicable to a multicarrier waveform, for example, an OFDM waveform. The UW signal is a sequence with a predetermined cyclic prefix. The sequence may be used for channel characteristic detection, or may be used as a cyclic prefix to eliminate inter-symbol interference. During receiving processing, the receiver first processes the UW signal, obtains a channel characteristic, a delay, and the like of received data by processing the UW signal, then processes a subsequent data segment to eliminate frequency-domain fluctuation caused by multipath transmission in a transmission channel, and then correctly demodulates the data.

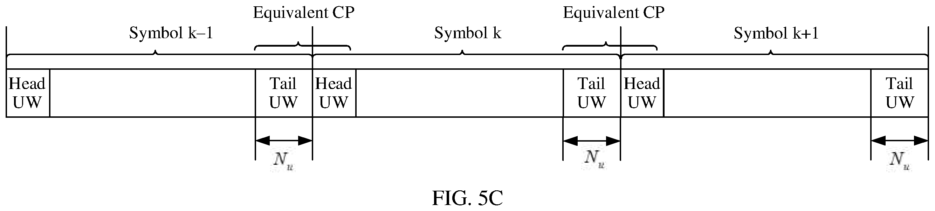

In Solution 2, no CP is added to a symbol, but an equivalent CP is constructed by using the UW signal. This helps reduce CP overheads. As shown in FIG. 5C, there are three consecutive symbols herein, each symbol has a tail UW signal with a length of *Nᵤ*, and the UW signals are the same. The same herein does not necessarily mean absolute same may also mean approximately same. Optionally, each symbol may further have a head UW signal. Because the UW signals are the same, a tail UW signal in a previous symbol may be used as an equivalent CP of a current symbol. For example, it is assumed that each symbol has both a tail UW signal and a head UW signal. In FIG. 5C, a tail UW signal in a symbol k-1 and a head UW signal in a symbol k may be used together as an equivalent CP of the symbol k, and a tail UW signal in the symbol k and a head UW signal in a symbol k+1 may be used together as an equivalent CP of the symbol k+1. Therefore, the equivalent CP length can be flexibly configured by adjusting a length of the UW signal.

Certainly, lengths of tail UW signals of all symbols may be equal or unequal. For example, a DMRS symbol and a previous data symbol of the DMRS symbol may have longer UW signals, to improve channel estimation quality. A data symbol and a previous data symbol of the data symbol may have shorter UW signals, to reduce overheads of the UW signals.

### Solution 3: Flexibly configure the CP length based on puncturing (puncture) a tail of a previous symbol

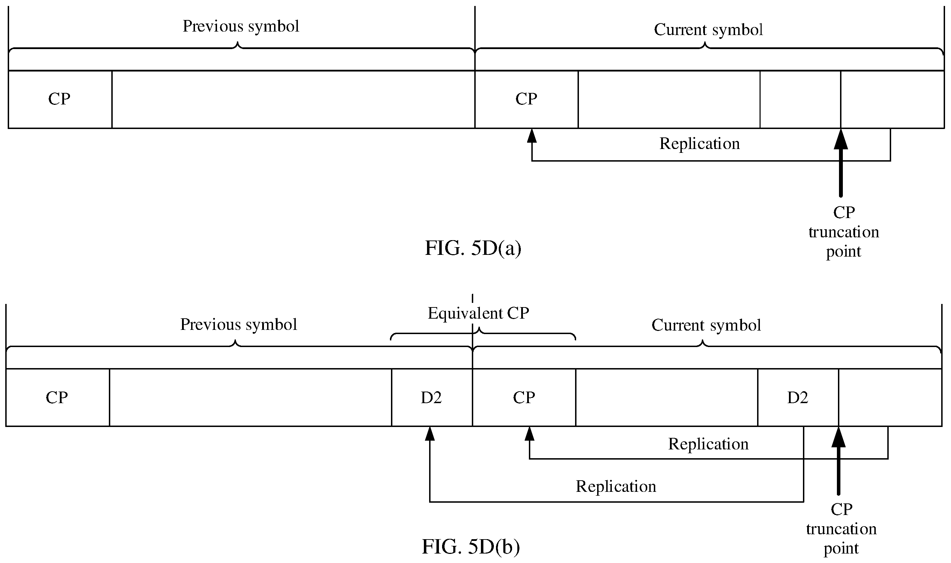

Solution 3 is applicable to a single carrier waveform, for example, a DFT-s-OFDM waveform or a time-domain linear convolution SC waveform, and is also applicable to a multicarrier waveform, for example, an OFDM waveform. Puncturing may be understood as replacing an original signal with a new signal. As shown in FIG. 5D(a), forward puncturing is used as an example. A tail part of a previous symbol is replaced with a D2 part (whose end position is a CP truncation point) of a current symbol, to achieve an effect shown in FIG. 5D(b). The D2 part of the current symbol is completely the same as a D2 part in the previous symbol, so that lossless CP extension can be implemented. Therefore, an equivalent CP length can be flexibly configured by adjusting a puncturing length.

Optionally, to reduce impact of puncturing on the previous symbol, because the receiver does not need to demodulate a UW signal, a puncturing position of the previous symbol may be the UW signal.

### 7. Zero head (ZH)/Zero tail (ZT)

The zero head is a head sequence whose start position is a start position of a symbol, and the head sequence is an (approximate) zero signal. The zero tail is a tail sequence whose end position is an end position of a symbol, and the tail sequence is an (approximate) zero signal. The ZH or ZT is applicable to a single carrier waveform, for example, a DFT-s-OFDM waveform or a time-domain linear convolution SC waveform, and is also applicable to a multicarrier waveform, for example, an OFDM waveform.

### (a) Use the ZT to reduce interference to a next symbol

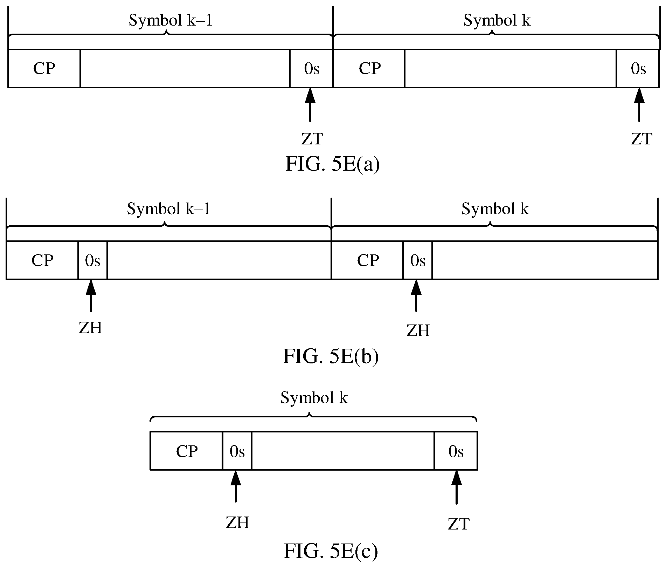

When the MDS exceeds the CP, a tail signal in a symbol *k* - 1 falls within an RX FFT window of a symbol *k*, thereby causing inter-symbol interference. As shown in FIG. 5E(a), if the signal in the tail signal the symbol *k* - 1 is an (approximate) zero signal (namely, the ZT), even if the MDS exceeds the CP, interference to the symbol *k* can be avoided (reduced). Optionally, the symbol may have a zero head (ZH), to reduce ZT power. The ZH is shorter than the ZT.

### (b) Use the ZH to reduce interference from a previous symbol

When the MDS exceeds the CP, whether a tail signal in a symbol *k* - 1 is a zero signal is unknown to a symbol *k.* If the signal is not a zero signal, the symbol *k* is still subject to inter-symbol interference. Therefore, a ZT-based solution is a passive design. A ZH-based solution (as shown in FIG. 5E(b)) is an active anti-interference design. Ahead part of the symbol *k* is actively designed as an (approximate) zero signal (namely, the ZH). Optionally, the symbol may have a ZT, to reduce ZH power. The ZH is longer than the ZT. The receiver does not need to demodulate the ZH/ZT. Therefore, even if the head part of the symbol *k* is interfered with, signal demodulation performance of another part of the symbol *k* is not affected.

### (c) Combine a ZH and a ZT to reduce inter-symbol interference

A main application scenario is that a previous symbol or a next symbol of a symbol *k* is a symbol with a high importance level. The symbol with the high importance level may include a synchronization symbol (for example, a primary synchronization symbol and a secondary synchronization symbol), a reference symbol (for example, a demodulation reference signal and a channel state information-reference signal), a control symbol (for example, a physical downlink control channel symbol and a physical uplink control channel symbol), and the like. These symbols provide parameters (for example, channel frequency responses) for data demodulation in a data shared channel. For such symbols, for some reasons, for example, parameter estimation performance is not affected, it is required that the symbols are not interfered with or are slightly interfered with.

As shown in FIG. 5E(c), if a symbol *k* uses a ZH to reduce interference from a previous symbol, and a next symbol of the symbol *k* is a symbol with a high importance level, the symbol *k* also needs to use a ZT to reduce interference to the symbol with a high importance level. Therefore, the symbol *k* has both the ZH and the ZT. If a symbol *k* uses a ZT to reduce interference to a next symbol, and a previous symbol of the symbol k is a symbol with a high importance level (without a ZT), to reduce interference from the symbol with a high importance level to the symbol *k,* the symbol *k* also needs a ZH. Therefore, the symbol *k* has both the ZH and the ZT.

### 8. Average symbol power

In the NR protocol, a mathematical expression of DFT in the DFT-s-OFDM waveform is shown in Formula (1): ${y}^{\left(0\right)} \left(l⋅{M}_{sc}^{PUSCH}+k\right) = \frac{1}{\sqrt{{M}_{sc}^{PUSCH}}} {\sum }_{i = 0}^{{M}_{sc}^{PUSCH} - 1} {{x}^{˜}}^{\left(0\right)} \left(l⋅{M}_{sc}^{PUSCH}+i\right) {e}^{- j \frac{2 πik}{{M}_{sc}^{PUSCH}}}$

In Formula (1), ${M}_{sc}^{PUSCH}$ represents a size of DFT, ${{x}^{˜}}^{\left(0\right)} \left(l⋅{M}_{sc}^{PUSCH}+i\right)$ represents an input of DFT, and ${y}^{\left(0\right)} \left(l⋅{M}_{sc}^{PUSCH}+k\right)$ represents an output of DFT. An expected energy value of ${{x}^{˜}}^{\left(0\right)} \left(l⋅{M}_{sc}^{PUSCH}+i\right)$, $i = 0 , 1 , … , {M}_{sc}^{PUSCH} - 1$ is 1, that is, an expected value of ${\left|{{x}^{˜}}^{\left(0\right)}\left(l⋅{M}_{sc}^{PUSCH}+i\right)\right|}^{2}$ is 1. For example, ${{x}^{˜}}^{\left(0\right)} \left(l⋅{M}_{sc}^{PUSCH}+i\right) , i = 0 , 1 , … , {M}_{sc}^{PUSCH} - 1$ may be a π/2-BPSK, BPSK, QPSK, 16QAM, 64QAM, 256QAM, or 1024QAM complex symbol in section 5.1 in the protocol 38.211. It is assumed that a size of IFFT transform in DFT-s-OFDM modulation is N. In this case, an expected average power value (namely, an average symbol power) of each sampling point in the DFT-s-OFDM symbol is equal to $\frac{{M}_{sc}^{PUSCH}}{N}$.

If DFT input data includes zero data, that is, there is ${{x}^{˜}}^{\left(0\right)} \left(l⋅{M}_{sc}^{PUSCH}+i\right) = 0 , i = 0 , 1 , … , {M}_{sc}^{PUSCH} - 1$ , expected energy of non-zero data is 1, and DFT transform in Formula (1) is used, the expected average power value (namely, the average symbol power) of each sampling point in the generated DFT-s-OFDM symbol is less than $\frac{{M}_{sc}^{PUSCH}}{N}$.

The assumption that the DFT input data includes zero data is valid, for example, the replication block mentioned above may be zero data, the UW signal may be zero data, and the ZT and the ZH are also zero data. Therefore, when a problem that the MDS exceeds the CP is handled in these manners, average symbol power may be reduced. Consequently, transmit power is affected, symbol demodulation performance is deteriorated, and signal transmission is affected.

To improve average symbol power and ensure signal transmission, this application provides a configuration method and a communication apparatus. The following further describes in detail the configuration method and the communication apparatus provided in embodiments of this application.

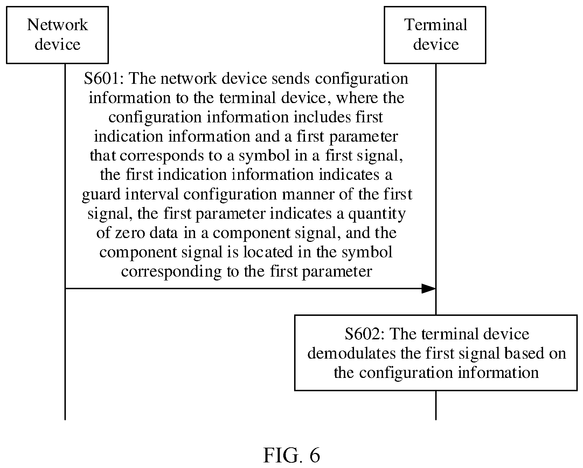

FIG. 6 is a schematic flowchart of a configuration method according to an embodiment of this application. As shown in FIG. 6, the configuration method includes steps S601 and S602. The method shown in FIG. 6 may be performed by a terminal device and a network device, or the method shown in FIG. 6 may be performed by a chip in a terminal device and a chip in a network device. This is not limited in embodiments of this application. In FIG. 6, an example in which the method is performed by the terminal device and the network device is used for description.

S601: The network device sends configuration information to the terminal device, where the configuration information includes first indication information and a first parameter that corresponds to a symbol in a first signal, the first indication information indicates a guard interval configuration manner of the first signal, the first parameter indicates a quantity of zero data of a component signal, and the component signal is located in the symbol corresponding to the first parameter. Correspondingly, the terminal device receives the configuration information from the network device.

In this embodiment of this application, the guard interval configuration manner may be considered as the foregoing solution of flexibly configuring the CP length. For example, a first guard interval configuration manner may be considered as Solution 3 for flexibly configuring the CP length (to be specific, flexibly configuring the CP length based on puncturing (puncture) the tail of the previous symbol), a second guard interval configuration manner may be considered as Solution 1 for flexibly configuring the CP length (to be specific, flexibly configuring the CP length based on the replication block), and a third guard interval configuration manner may be considered as Solution 2 for flexibly configuring the CP length (to be specific, flexibly configuring the CP length based on the UW signal). Certainly, the guard interval configuration manner herein may alternatively be another configuration manner. This is not limited herein.

In a possible implementation, the guard interval configuration manner includes the first guard interval configuration manner, the second guard interval configuration manner, and the third guard interval configuration manner. The following describes in detail different guard interval configuration manners.

Manner 1: The guard interval configuration manner of the first signal is the first guard interval configuration manner. The first guard interval configuration manner herein may be considered as Solution 3 for flexibly configuring the CP length (to be specific, flexibly configuring the CP length based on puncturing (puncture) the tail of the previous symbol).

In specific implementation, when the first signal uses the first guard interval configuration manner, if a previous symbol or a next symbol of a current symbol is a symbol with a high importance level, to ensure that the symbol with the high importance level is not interfered with as much as possible, a ZH signal and/or a ZT signal may exist in the current symbol. Because both the ZH signal and the ZT signal are zero signals, average symbol power of the current symbol is decreased. Consequently, transmit power is affected, symbol demodulation performance is deteriorated, and signal transmission is affected.

To increase the average symbol power and ensure signal transmission, power increasing may be performed on non-zero signals in some symbols of the first signal. Therefore, a key is to determine symbols whose power can be increased and a quantity of zero data of component signals (such as ZH signals and/or ZT signals) in these symbols. Specifically, the network device may send the configuration information of the first signal to the terminal device, to notify the terminal device of the guard interval configuration manner used by the first signal and the first parameter that corresponds to the symbol on which power increasing is performed in the first signal. The first parameter herein is a quantity of zero data of a component signal in the symbol on which power increasing is performed. In this way, after receiving the first signal, the terminal device may determine, based on the configuration information of the first signal, symbols on which power increasing is performed in the first signal and how power increasing is performed, to demodulate the first signal in a corresponding manner. This can improve demodulation performance without affecting channel estimation and equalization. The first signal received by the terminal device herein may be sent by the network device, or may be sent by another device. This is not limited herein.

The symbol with the high importance level mentioned herein may be a demodulation reference signal (demodulation reference signal, DMRS), a channel state information-reference signal (channel state information-reference signal, CSI-RS), a physical downlink control channel (physical downlink control channel, PDCCH), a physical uplink control channel (physical uplink control channel, PUCCH), a sounding reference signal (sounding reference signal, SRS), a synchronization signal block (synchronization signal block, SSB), ultra-reliable low-latency communication (ultra-reliable low-latency communication, URLLC) signal, or the like. This is not limited herein. For these symbols with the high importance levels, for some reasons (for example, parameter estimation performance is not affected), it is required that the symbols are not interfered with or are slightly interfered with, and no ZH signal or ZT signal exists in the symbols with the high importance levels.

For example, a first symbol is a symbol with a high importance level. The following describes in detail power increasing performed on a symbol in different cases. Optionally, the first symbol is any one of the following symbols: a DMRS, a CSI-RS, a PDCCH, a PUCCH, an SRS, an SSB, and URLLC.

Case 1: The guard interval configuration manner of the first signal is the first guard interval configuration manner, the first signal includes the first symbol and a second symbol, the first symbol is a symbol immediately preceding the second symbol, and the second symbol includes a ZH signal and/or a ZT signal. In this case, in the first guard interval configuration manner, a first parameter corresponding to the second symbol indicates a quantity of zero data of the ZH signal and/or the ZT signal in the second symbol.

A start position of the ZH signal in the second symbol is a next sampling point of a CP end position of the second symbol, and an end position of the ZT signal in the second symbol is an end position of the second symbol.

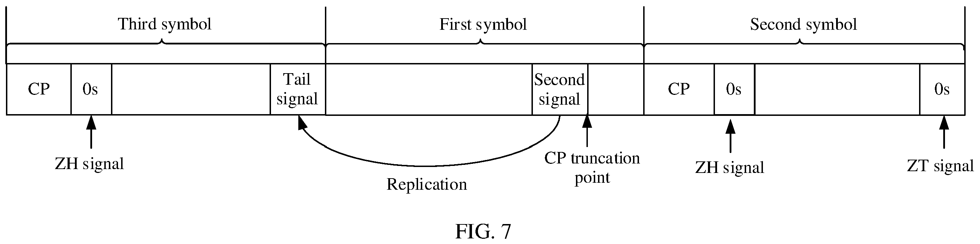

It may be understood that, as shown in FIG. 7, in the first guard interval configuration manner, when a previous symbol (namely, the first symbol) of the second symbol is a symbol with a high importance level, if the ZH signal and/or the ZT signal exist in the second symbol, power increasing may be performed on the second symbol. The ZH signal and the ZT signal are zero signals. In this case, the first parameter corresponding to the second symbol indicates the quantity of zero data of the ZH signal and/or the ZT signal in the second symbol.

Case 2: The first signal further includes a third symbol, the third symbol is a symbol immediately preceding the first symbol, the third symbol includes a ZH signal, and a tail signal in the third symbol is replaced with a component signal in the first symbol. In this case, in the first guard interval configuration manner, a first parameter corresponding to the third symbol indicates a quantity of zero data of the ZH signal in the third symbol.

A start position of the ZH signal in the third symbol is a next sampling point of a CP end position of the third symbol, an end position of a tail signal in the third symbol is an end position of the third symbol, and an end position of a component signal in the first symbol is a CP truncation point of the first symbol.

It may be understood that, as shown in FIG. 7, in the first guard interval configuration manner, when a next symbol (namely, the first symbol) of the third symbol is a symbol with a high importance level, if the ZH signal exists in the third symbol, power increasing may be performed on the third symbol. The ZH signal is a zero signal. In this case, the first parameter corresponding to the second symbol indicates the quantity of zero data of the ZH signal in the second symbol. After power increasing is performed on the third symbol, the tail signal in the third symbol may be replaced with a component signal in the first symbol, to serve as a supplementary CP (SCP) of the first symbol, to avoid interference to the first symbol.

Manner 2: The guard interval configuration manner of the first signal is the second guard interval configuration manner. The second guard interval configuration manner herein may be considered as the foregoing Solution 1 for flexibly configuring the CP length (to be specific, flexibly configuring the CP length based on the replication block).

In specific implementation, when the first signal uses the second guard interval configuration manner, there is a possibility that replication blocks in some symbols are zero signals. In this case, average symbol power is decreased. Consequently, transmit power is affected, symbol demodulation performance is deteriorated, and signal transmission is affected.

To increase the average symbol power and ensure signal transmission, power increasing may be performed on non-zero signals in some symbols of the first signal. Therefore, a key is to determine symbols whose power can be increased and a quantity of zero data of component signals (such as replication blocks) in these symbols. Specifically, the network device may send the configuration information of the first signal to the terminal device, to notify the terminal device of the guard interval configuration manner used by the first signal and the first parameter that corresponds to the symbol on which power increasing is performed in the first signal. The first parameter herein is a quantity of zero data of a component signal in the symbol on which power increasing is performed. In this way, after receiving the first signal, the terminal device may determine, based on the configuration information of the first signal, symbols on which power increasing is performed in the first signal and how power increasing is performed, to demodulate the first signal in a corresponding manner. This improves demodulation performance without affecting channel estimation and equalization.

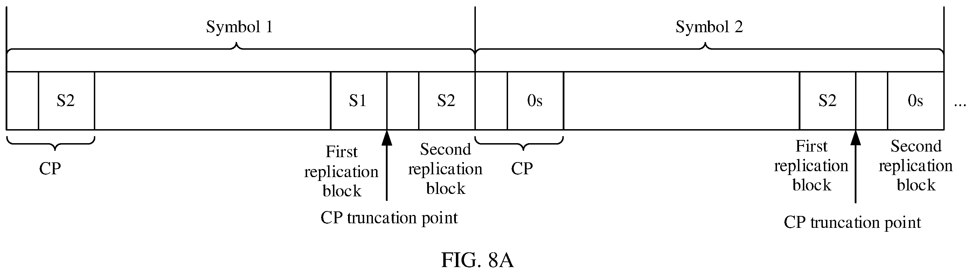

It should be noted that, power increasing cannot be performed on a non-zero signal in a symbol as long as there is a zero signal in a replication block of the symbol. As shown in FIG. 8A, each symbol in the first signal has two replication blocks. A symbol 1 and a symbol 2 are used as an example. The symbol 1 has a first replication block (S1) and a second replication block (S2, non-zero signal), and the symbol 2 has a first replication block (S2) and a second replication block (zero signal). The second replication block of the symbol 2 is a zero signal. Data of the second replication block of the symbol 1 is the same as data of the first replication block of the symbol 2. The second replication block of the symbol 1 may be used as a supplementary CP (SCP) of the symbol 2. In other words, the second replication block of the symbol 1 and a CP of the symbol 2 may be used together as an equivalent CP of the symbol 2. Because the second replication block of the symbol 2 is a zero signal, if power increasing is performed on the non-zero signal in the symbol 2, after power increasing, the data of the first replication block of the symbol 2 is different from the data of the second replication block of the symbol 1. In this case, the second replication block of the symbol 1 cannot be used as the supplementary CP of the symbol 2, and inter-symbol interference may be easily caused. Therefore, power increasing can be performed on a symbol only when the symbol meets any one of the following conditions.

It is assumed that each symbol in the first signal includes a first replication block and a second replication block. The following describes different conditions.

Condition 1: The first signal includes a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal. In the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

An end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol.

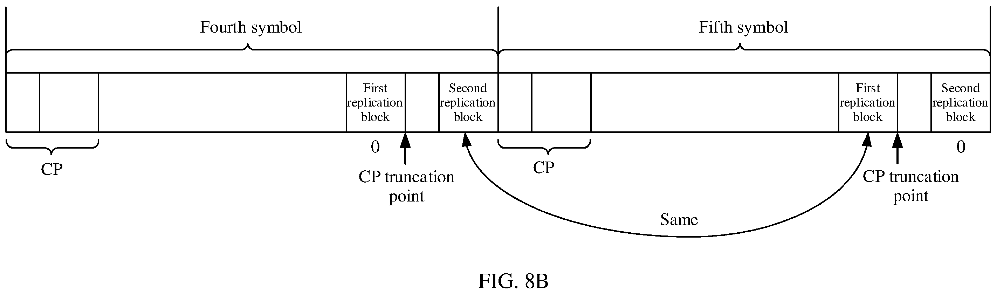

It may be understood that, as shown in FIG. 8B, for two adjacent symbols (namely, the fourth symbol and the fifth symbol) in the middle of the first signal, when Condition 1 (the first replication block of the fourth symbol is a zero signal, and the second replication block of the fifth symbol is a zero signal) is met, power increasing may be performed on the fourth symbol and the fifth symbol. To further reduce interference introduced when a CP is exceeded, the second replication block of the fourth symbol and the first replication block of the fifth symbol may also be zero signals. Therefore, the first parameter corresponding to the fourth symbol may indicate the quantity of zero data of the first replication block and the second replication block of the first symbol, and the first parameter corresponding to the fifth symbol may indicate the quantity of zero data of the first replication block and the second replication block of the fifth symbol.

Condition 2: The first signal includes a sixth symbol and a seventh symbol, the sixth symbol is a symbol immediately preceding the seventh symbol, and the sixth symbol is a 1^{st} symbol in the first signal. In the second guard interval configuration manner, if the second replication block of the sixth symbol is a zero signal, a first parameter corresponding to the sixth symbol indicates a quantity of zero data of the first replication block and the second replication block of the sixth symbol.

An end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol.

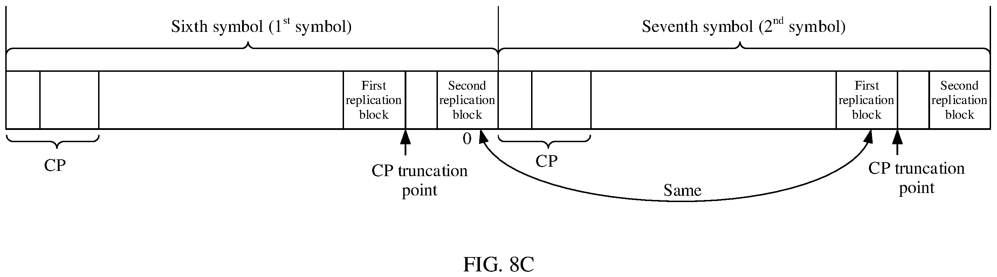

It may be understood that, as shown in FIG. 8C, when the 1^{st} symbol in the first signal meets Condition 2 (the second replication block of the sixth symbol is a zero signal), power increasing may be performed on the 1^{st} symbol in the first signal. To construct a cyclic convolution and reduce interference introduced when the CP is exceeded, the first replication block of the 1^{st} symbol may also be a zero signal. Therefore, the first parameter corresponding to the 1^{st} symbol may indicate the quantity of zero data of the first replication block and the second replication block of the 1^{st} symbol.

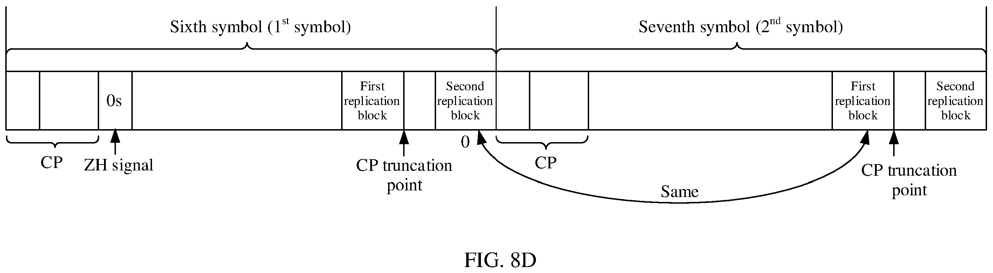

Optionally, as shown in FIG. 8D, the sixth symbol further includes a ZH signal, and the first parameter corresponding to the sixth symbol further indicates a quantity of zero data of the ZH signal in the sixth symbol.

It may be understood that, to reduce performance deterioration caused by inter-symbol interference introduced when a CP is exceeded to the 1^{st} symbol, the ZH signal may be further added to the 1^{st} symbol. Because the ZH signal is a zero signal, the first parameter corresponding to the 1^{st} symbol further needs to indicate the quantity of zero data of the ZH signal in the 1^{st} symbol.

Condition 3: The first signal includes an eighth symbol and a ninth symbol, the eighth symbol is a symbol immediately preceding the ninth symbol, and the ninth symbol is a last symbol in the first signal. In the second guard interval configuration manner, if the first replication block of the ninth symbol is a zero signal, a first parameter corresponding to the ninth symbol indicates a quantity of zero data of the first replication block and the second replication block of the ninth symbol.

An end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol.

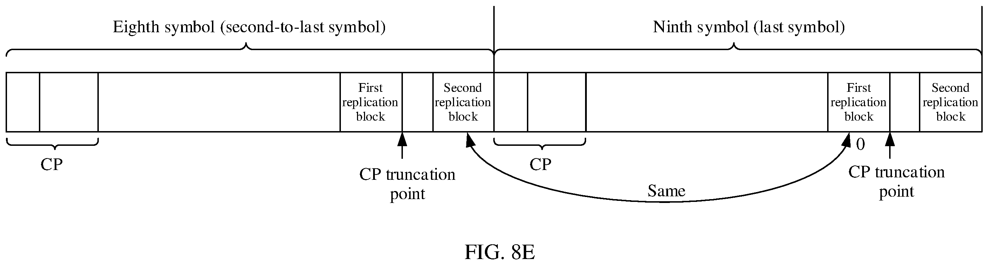

It may be understood that, as shown in FIG. 8E, when the last symbol in the first signal meets Condition 3 (the first replication block of the ninth symbol is a zero signal), power increasing may be performed on the last symbol in the first signal. To reduce interference to another user, the second replication block of the last symbol may also be a zero signal. Therefore, the first parameter corresponding to the last symbol may indicate the quantity of zero data of the first replication block and the second replication block of the last symbol.

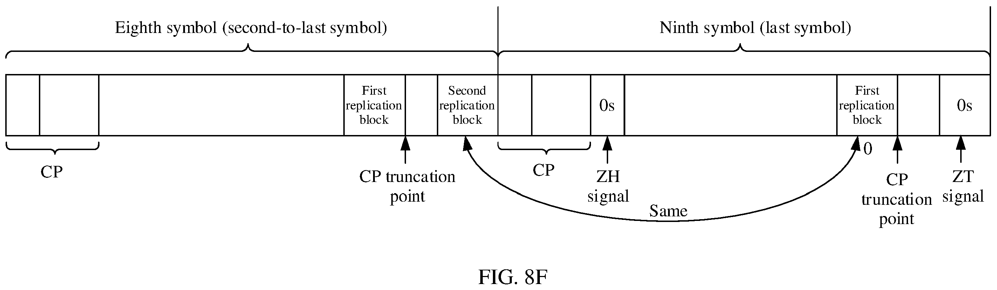

Optionally, as shown in FIG. 8F, the ninth symbol further includes a ZH signal and/or a ZT signal, and the first parameter corresponding to the ninth symbol further indicates a quantity of zero data of the ZH signal and/or the ZT signal in the ninth symbol.

It may be understood that, to reduce interference to the another user, the last symbol in the first signal may have a ZT signal; and/or to reduce a power level of the ZT signal, the last symbol in the first signal may also have a ZH signal. Because both the ZT signal and the ZH signal are zero signals, the first parameter corresponding to the last symbol further needs to indicate the quantity of zero data of the ZH signal and/or the ZT signal in the last symbol.

Manner 3: The guard interval configuration manner of the first signal is the third guard interval configuration manner. The first guard interval configuration manner herein may be considered as the foregoing Solution 2 for flexibly configuring the CP length (to be specific, flexibly configuring the CP length based on the UW signal).

In specific implementation, when the first signal uses the third guard interval configuration manner, there is a possibility that UW signals in some symbols are zero signals. In this case, average symbol power is decreased. Consequently, transmit power is affected, symbol demodulation performance is deteriorated, and signal transmission is affected.

To increase the average symbol power and ensure signal transmission, power increasing may be performed on non-zero signals in some symbols of the first signal. Therefore, a key is to determine symbols whose power can be increased and a quantity of zero data of component signals (such as UW signals) in these symbols. Specifically, the network device may send the configuration information of the first signal to the terminal device, to notify the terminal device of the guard interval configuration manner used by the first signal and the first parameter that corresponds to the symbol on which power increasing is performed in the first signal. The first parameter herein is a quantity of zero data of a component signal in the symbol on which power increasing is performed. In this way, after receiving the first signal, the terminal device may determine, based on the configuration information of the first signal, symbols on which power increasing is performed in the first signal and how power increasing is performed, to demodulate the first signal in a corresponding manner. This improves demodulation performance without affecting channel estimation and equalization. The first signal received by the terminal device herein may be sent by the network device, or may be sent by another device. This is not limited herein.

It should be noted that the UW signal included in the first signal may be a head UW signal and/or a tail UW signal. The following uses the third symbol as an example for detailed description.

Optionally, the guard interval configuration manner of the first signal is the third guard interval configuration manner, a tenth symbol is any symbol in the first signal, the tenth symbol includes a tail UW signal, and an end position of the tail UW signal in the tenth symbol is an end position of the tenth symbol. In the third guard interval configuration manner, if the tail UW signal is a zero signal, a first parameter corresponding to the tenth symbol indicates a quantity of zero data of the tail UW signal in the tenth symbol.

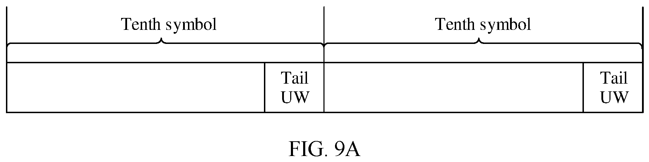

It may be understood that, as shown in FIG. 9A, each symbol in the first signal may have a tail UW signal. If a tail UW signal in a current symbol is a zero signal, power increasing may be performed on the current symbol. A reason is that when the tail UW signal in the current symbol is a zero signal, if power increasing is performed on the current symbol, the tail UW signal is still a zero signal, and can still be used as an equivalent CP of a next symbol, to avoid inter-symbol interference.

It should be noted that, for different types of symbols, lengths of tail UW signals may be the same, which helps reduce calculation loads. For different types of symbols, lengths of tail UW signals may also be different, which helps ensure that a symbol with a high importance level is not interfered with. For example, a length of a tail UW signal in a previous data symbol of the symbol with the high importance level may be longer than a length of a tail UW signal in the symbol with the high importance level. The symbol with the high importance level herein may be a DMRS, a CSI-RS, a PDCCH, a PUCCH, an SRS, an SSB, URLLC, or the like.

Further, optionally, the tenth symbol further includes a head UW signal, and a start position of the head UW signal in the tenth symbol is a start position of the tenth symbol. If the head UW signal is a zero signal, the first parameter corresponding to the tenth symbol further indicates a quantity of zero data of the head UW signal in the tenth symbol.

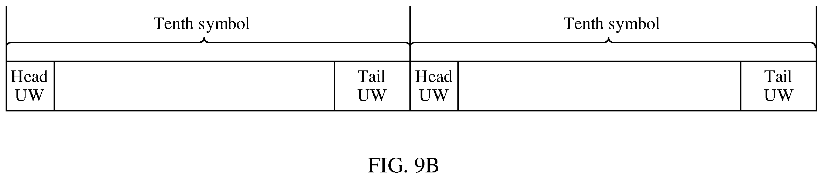

It may be understood that, as shown in FIG. 9B, when a tail UW signal in a previous symbol of the tenth symbol is used as an equivalent CP of the tenth symbol, an error may exist, and consequently, inter-symbol interference occurs. To reduce this error, the head UW signal may be added to the tenth symbol, and the head UW signal is also a zero signal. In this way, the equivalent CP can be prolonged. Therefore, the first parameter corresponding to the tenth symbol should further indicate the quantity of zero data of the head UW signal in the tenth symbol.

In a possible implementation, the method further includes: The network device processes, based on the first parameter, first data corresponding to the symbol, to obtain second data corresponding to the symbol, where the first data is input data of DFT, and the second data is output data of DFT; and the network device processes the second data corresponding to the symbol, to obtain the first signal, where the symbol includes the second symbol and/or the third symbol; or the symbol includes one or more of the following symbols: the fourth symbol, the fifth symbol, the sixth symbol, and the ninth symbol; or the symbol includes the tenth symbol. According to this manner, average symbol power can be improved, demodulation performance can be improved, and signal transmission can be ensured.

Optionally, an amplitude scale factor of the first data is $\sqrt{\frac{M}{M - {N}_{0}}}$, where *M* is a size of DFT, and *N*₀ is the first parameter corresponding to the symbol.

It may be understood that the network device may determine, based on the first parameter, the amplitude scale factor of the first data on which power increasing needs to be performed. For DFT-s-OFDM modulation, the amplitude scale factor may be used to adjust the foregoing Formula (1), to obtain the following Formula (2). In this way, the input data (namely, the first data) of DFT is processed by using Formula (2), to obtain the output data (namely, the second data) of DFT, thereby implementing power increasing of the symbol. The output data of DFT after power increasing is processed, to generate the first signal. In this way, final transmit power of the first signal is also increased, and signal transmission is ensured. $\begin{matrix}{y}^{\left(0\right)} \left(l⋅{M}_{sc}^{PUSCH}+k\right) = \frac{1}{\sqrt{{M}_{sc}^{PUSCH}}} {\sum }_{i = 0}^{{M}_{sc}^{PUSCH} - 1} \frac{\sqrt{{M}_{sc}^{PUSCH}}}{\sqrt{{M}_{sc}^{PUSCH} - {N}_{0}}} {{x}^{˜}}^{\left(0\right)} \left(l⋅{M}_{sc}^{PUSCH}+i\right) {e}^{- j \frac{2 πik}{{M}_{sc}^{PUSCH}}} \\ = \frac{1}{\sqrt{{M}_{sc}^{PUSCH} - {N}_{0}}} {\sum }_{i = 0}^{{M}_{sc}^{PUSCH} - 1} {{x}^{˜}}^{\left(0\right)} \left(l⋅{M}_{sc}^{PUSCH}+i\right) {e}^{- j \frac{2 πik}{{M}_{sc}^{PUSCH}}}\end{matrix}$

In Formula (2), ${M}_{sc}^{PUSCH}$ represents the size of DFT (namely, the foregoing mentioned *M),* ${{x}^{˜}}^{\left(0\right)} \left(l⋅{M}_{sc}^{PUSCH}+i\right)$ represents an input of DFT (namely, the first data corresponding to the symbol), and ${y}^{\left(0\right)} \left(l⋅{M}_{sc}^{PUSCH}+k\right)$ represents an output of DFT (namely, the second data corresponding to the symbol). An expected energy value of ${{x}^{˜}}^{\left(0\right)} \left(l⋅{M}_{sc}^{PUSCH}+i\right) , i = 0 , 1 , … , {M}_{sc}^{PUSCH} - 1$ is 1, that is, an expected value of ${\left|{{x}^{˜}}^{\left(0\right)}\left(l⋅{M}_{sc}^{PUSCH}+i\right)\right|}^{2}$ is 1. For example, ${{x}^{˜}}^{\left(0\right)} \left(l⋅{M}_{sc}^{PUSCH}+i\right) , i = 0 , 1 , … , {M}_{sc}^{PUSCH} - 1$ may be a π/2-BPSK, BPSK, QPSK, 16QAM, 64QAM, 256QAM, or 1024QAM complex symbol in section 5.1 in the protocol 38.211. $\frac{\sqrt{{M}_{sc}^{PUSCH}}}{\sqrt{{M}_{sc}^{PUSCH} - {N}_{0}}} {{x}^{˜}}^{\left(0\right)} \left(l⋅{M}_{sc}^{PUSCH}+i\right)$ indicates that amplitude scaling is performed on the first data by using the amplitude scale factor.

Certainly, Formula (2) may also be in another variant form. This is not limited herein. For example, Formula (2) may be transformed into Formula (3): ${y}^{\left(0\right)} \left(l⋅{M}_{sc}^{PUSCH}+k\right) = {\sum }_{i = 0}^{{M}_{sc}^{PUSCH} - 1} \frac{1}{\sqrt{{M}_{sc}^{PUSCH} - {N}_{0}}} {{x}^{˜}}^{\left(0\right)} \left(l⋅{M}_{sc}^{PUSCH}+i\right) {e}^{- j \frac{2 πik}{{M}_{sc}^{PUSCH}}}$

Formula (2) may also be transformed into Formula (4): ${y}^{\left(0\right)} \left(l⋅{M}_{sc}^{PUSCH}+k\right) = {\sum }_{i = 0}^{{M}_{sc}^{PUSCH} - 1} {{x}^{˜}}^{\left(0\right)} \frac{1}{\sqrt{{M}_{sc}^{PUSCH} - {N}_{0}}} \left(l⋅{M}_{sc}^{PUSCH}+i\right) {e}^{- j \frac{2 πik}{{M}_{sc}^{PUSCH}}}$

For DFT-s-OFDM modulation and time-domain linear convolution SC modulation, the foregoing Formula (1) may not be adjusted, and power increasing may be implemented by directly multiplying the first data by a corresponding amplitude scale factor (amplitude scale factor, ASF). In this way, the final transmit power of the first signal is also increased, and signal transmission is ensured. In this case, the amplitude scale factor of the first data is $\sqrt{\frac{M}{M - {N}_{0}}}$, where *M* is the size of DFT (namely, the foregoing mentioned ${M}_{sc}^{PUSCH}$), and *N*₀ is the first parameter corresponding to the symbol.

In a possible implementation, the method further includes: The network device sends the first signal to the terminal device. Correspondingly, the terminal device receives the first signal sent by the network device.

It should be noted that the configuration information may be carried in downlink control information (downlink control information, DCI), or may be carried in a media access control-control element (medium access control-control element, MAC-CE), or may be carried in radio resource control (radio resource control, RRC). This is not limited herein.

S602: The terminal device demodulates the first signal based on the configuration information.

In this embodiment of this application, after receiving the first signal, the terminal device may determine, based on the configuration information, symbols on which power increasing is performed in the first signal and how power increasing is performed, to demodulate the first signal in a corresponding manner. This improves demodulation performance without affecting channel estimation and equalization. The first signal received by the terminal device herein may be sent by the network device, or may be sent by another device. This is not limited herein.

In a possible implementation, when the terminal device demodulates the first signal based on the configuration information, a specific implementation may be: The terminal device processes the first signal to obtain second data corresponding to the symbol, where the second data is output data of DFT; and the terminal device processes, based on the first parameter, the second data corresponding to the symbol, to obtain first data corresponding to the symbol, where the first data is input data of DFT, and the symbol includes the second symbol and/or the third symbol; or the symbol includes one or more of the following symbols: the fourth symbol, the fifth symbol, the sixth symbol, and the ninth symbol; or the symbol includes the tenth symbol. According to this manner, average symbol power can be improved, demodulation performance can be improved, and signal transmission can be ensured.

Optionally, an amplitude scale factor of the first data is $\sqrt{\frac{M}{M - {N}_{0}}}$, where *M* is a size of DFT, and *N*₀ is the first parameter corresponding to the symbol.

It may be understood that the first signal is generated based on the configuration information. Correspondingly, after receiving the first signal, the terminal device also needs to perform inverse processing based on the configuration information. For DFT-s-OFDM modulation, if power increasing is performed on the first data by using the foregoing Formula (2), *M* (namely, the foregoing mentioned ${M}_{sc}^{PUSCH}$)-point IDFT performed by the terminal device may be modified to IDFT whose normalization factor is $\frac{1}{\sqrt{M - {N}_{0}}}$*.* For DFT-s-OFDM modulation and time-domain linear convolution SC modulation, if power increasing is performed by directly multiplying the first data by the corresponding ASF, the first data needs to be divided by the ASF, that is, divided by $\sqrt{\frac{M}{M - {N}_{0}}}$, after channel equalization, to demodulate the first signal.

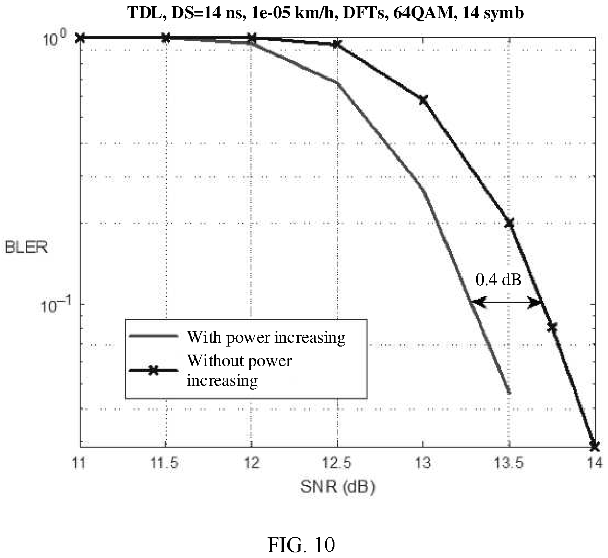

The following uses a specific example to explain improvement of symbol demodulation performance brought by power increasing. As shown in Table 1, a waveform in the simulation parameter table is a DFT-s-OFDM waveform. The modulation scheme is 64QAM. Low-density parity-check code (low-density parity-check code, LDPC) is used for encoding and decoding, and a code rate is 1/3. A subcarrier spacing is 3840 kHz. A quantity of DFT points (namely, DFT size) is 180. A quantity of IFFT points is 512. A quantity of sampling points in a CP is 36. A PDSCH includes 14 symbols, and a DMRS is a 2^{nd} symbol. A channel is a delay line B channel. An MDS is 14 ns, corresponding to 144 sampling points. A moving speed is 0.00001 km/h. A solution for an extended CP is to extend a CP of a DMRS symbol to 144 sampling points through forward puncturing. 1^{st} and 3^{rd} symbols have ZH signals and ZT signals with lengths of 108. Lengths of ZH signals in 4^{th} to 13^{th} symbols are 3, and a length of a ZT signal in each symbol is 108. A 14^{th} symbol has neither a ZH signal nor a ZT signal. Channel estimation and equalization are performed by using a minimum mean square error (minimum mean square error, MMSE). A simulation result is shown in FIG. 10, and demodulation block error ratio (block error ratio, BLER) performance is provided. It can be seen that, performance can be improved by 0.4 dB at a BLER of 10% by performing power increasing on a symbol.

**Table 1**

| Parameter | Parameter value |
|---|---|
| Waveform | DFT-s-OFDM |
| Modulation scheme | 64QAM |
| Encoding and decoding | LDPC, and code rate 1/3 |
| Subcarrier spacing | 3840 kHz |
| Quantity of DFT points | 180 |
| Quantity of IFFT points | 512 |
| Quantity of sampling points in the CP | 36 |
| PDSCH | 14 symbols, where the DMRS is the 2^{nd} symbol |
| Channel | Delay line B channel, where an MDS is 14 ns, corresponding to 144 sampling points, and a moving speed is 0.00001 km/h. |
| Solution for the extended CP | The CP of the DMRS symbol is extended to the 144 sampling points through forward puncturing; the 1^{st} and 3^{rd} symbols have the ZH signals and the ZT signals with the same length of 108; the lengths of the ZH signals in the 4^{th} to 13^{th} symbols are all 3, and the length of the ZT signal in each symbol is 108; and the 14^{th} symbol has neither the ZH signal nor the ZT signal. |
| Channel estimation and equalization | MMSE |

It can be learned that, according to the method described in this application, power increasing is performed on non-zero signals in some symbols in the first signal, to increase average symbol power, thereby ensuring signal transmission and improving demodulation performance. In a specific process, the network device needs to send the configuration information to the terminal device. The configuration information includes the first indication information and the first parameter that corresponds to the symbol in the first signal. The first indication information indicates the guard interval configuration manner of the first signal. The first parameter indicates the quantity of zero data in the component signal, and the component signal is located in the symbol corresponding to the first parameter. After receiving the configuration information, the terminal device may determine, based on the configuration information, the symbols on which power increasing is performed and the quantity of zero data of the component signals in these symbols, to demodulate the first signal in a corresponding manner. This improves demodulation performance without affecting channel estimation and equalization.

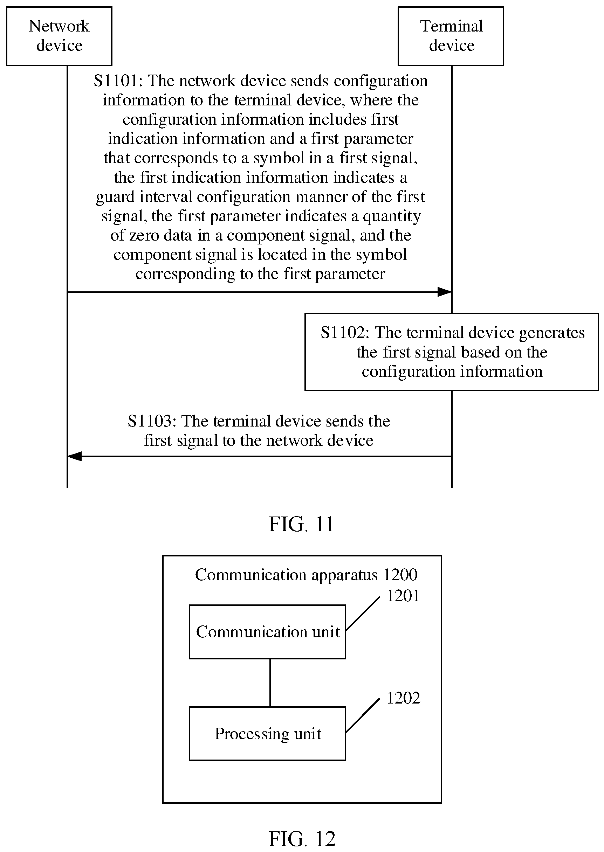

FIG. 11 is a schematic flowchart of another configuration method according to an embodiment of this application. As shown in FIG. 11, the configuration method includes steps S1101 to S1103. The method shown in FIG. 11 may be performed by a terminal device and a network device, or the method shown in FIG. 11 may be performed by a chip in a terminal device and a chip in a network device. This is not limited in embodiments of this application. In FIG. 11, an example in which the method is performed by the terminal device and the network device is used for description.

S1101: The network device sends configuration information to a terminal device, where the configuration information includes first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter. Correspondingly, the terminal device receives the configuration information from the network device.

For a specific implementation of step S1101, refer to the specific implementation of step S601. Details are not described herein again.

S1102: The terminal device generates the first signal based on the configuration information.

In a possible implementation, when the terminal device generates the first signal based on the configuration information, a specific implementation may be: The terminal device processes, based on the first parameter, first data corresponding to the symbol, to obtain second data corresponding to the symbol, where the first data is input data of DFT, and the second data is output data of DFT; and the terminal device processes the second data corresponding to the symbol, to obtain the first signal, where the symbol includes a second symbol and/or a third symbol; or the symbol includes one or more of the following symbols: a fourth symbol, a fifth symbol, a sixth symbol, and a ninth symbol; or the symbol includes a tenth symbol. According to this manner, average symbol power can be improved, demodulation performance can be improved, and signal transmission can be ensured.

Optionally, an amplitude scale factor of the first data is $\sqrt{\frac{M}{M - {N}_{0}}}$, where *M* is a size of discrete Fourier transform DFT, and *N*₀ is the first parameter corresponding to the symbol.

It may be understood that the network device may determine, based on the first parameter, the amplitude scale factor of the first data on which power increasing needs to be performed. For DFT-s-OFDM modulation, the amplitude scale factor may be used to adjust the foregoing Formula (1), to obtain the following Formula (2). In this way, the input data (namely, the first data) of DFT is processed by using Formula (2), to obtain the output data (namely, the second data) of DFT, thereby implementing power increasing of the symbol. The output data of DFT after power increasing is processed, to generate the first signal. In this way, final transmit power of the first signal is also increased, and signal transmission is ensured. Certainly, Formula (2) may also be in another variant form. This is not limited herein. For example, Formula (2) may be transformed into Formula (3), Formula (4), or the like.

For DFT-s-OFDM modulation and time-domain linear convolution SC modulation, the foregoing Formula (1) may not be adjusted, and power increasing may be implemented by directly multiplying the first data by a corresponding amplitude scale factor (amplitude scale factor, ASF). In this way, the final transmit power of the first signal is also increased, and signal transmission is ensured. In this case, an amplitude scale factor of the first data is $\sqrt{\frac{M}{M - {N}_{0}}}$, where *M* is a size of DFT (namely, the foregoing mentioned ${M}_{sc}^{PUSCH}$), and *N*₀ is the first parameter corresponding to the symbol.

S1103: The terminal device sends the first signal to the network device, and correspondingly, the network device receives the first signal from the terminal device.

In a possible implementation, the method further includes: The network device processes the first signal to obtain second data corresponding to the symbol, where the second data is output data of DFT; and the network device processes, based on the first parameter, the second data corresponding to the symbol, to obtain first data corresponding to the symbol, where the first data is input data of DFT, and the symbol includes the second symbol and/or the third symbol; or the symbol includes one or more of the following symbols: the fourth symbol, the fifth symbol, the sixth symbol, and the ninth symbol; or the symbol includes the tenth symbol. According to this manner, average symbol power can be improved, demodulation performance can be improved, and signal transmission can be ensured.

Optionally, the amplitude scale factor of the first data is $\sqrt{\frac{M}{M - {N}_{0}}}$, where *M* is the size of DFT, and *N*₀ is the first parameter corresponding to the symbol.

It may be understood that the first signal is generated based on the configuration information. Correspondingly, after receiving the first signal from the terminal device, the network device also needs to perform inverse processing based on the configuration information. For DFT-s-OFDM modulation, if power increasing is performed on the first data by using the foregoing Formula (2), *M* (namely, the foregoing mentioned ${M}_{sc}^{PUSCH}$)-point IDFT performed by the terminal device may be modified to IDFT whose normalization factor is $\frac{1}{\sqrt{M - {N}_{0}}}$*.* For DFT-s-OFDM modulation and time-domain linear convolution SC modulation, if power increasing is performed by directly multiplying the first data by the corresponding ASF, the first data needs to be divided by the ASF, that is, divided by $\sqrt{\frac{M}{M - {N}_{0}}}$, after channel equalization, to demodulate the first signal.

It should be noted that, after generating the first signal, the terminal device may also send the first signal to another device. This is not limited herein.

It can be learned that, according to the method described in this application, power increasing is performed on non-zero signals in some symbols in the first signal, to increase average symbol power, thereby ensuring signal transmission and improving demodulation performance. In a specific process, the network device needs to send the configuration information to the terminal device. The configuration information includes the first indication information and the first parameter that corresponds to the symbol in the first signal. The first indication information indicates the guard interval configuration manner of the first signal. The first parameter indicates the quantity of zero data in the component signal, and the component signal is located in the symbol corresponding to the first parameter. After receiving the configuration information, the terminal device may determine, based on the configuration information, symbols on which power increasing is performed and a quantity of zero data of component signals in these symbols, to generate the first signal in a corresponding manner and send the first signal to the network device. Correspondingly, the network device may also demodulate the first signal in a corresponding manner based on the configuration information. This improves demodulation performance without affecting channel estimation and equalization.

FIG. 12 is a diagram of a structure of a communication apparatus 1200 according to an embodiment of this application. The communication apparatus shown in FIG. 12 may be a terminal device or a network device, or may be an apparatus in a terminal device or a network device, or an apparatus that can be used together with a terminal device or a network device. Specifically, as shown in FIG. 12, a communication apparatus 1200 may include a communication unit 1201 and a processing unit 1202. The processing unit 1202 is configured to perform data processing. The communication unit 1201 is configured to perform communication. Optionally, a receiving unit and a sending unit are integrated in the communication unit 1201. The communication unit 1201 may also be referred to as a transceiver unit. Alternatively, the communication unit 1201 may be split into a receiving unit and a sending unit.

In an implementation, the communication apparatus 1200 may be a terminal device, an apparatus in a terminal device, or an apparatus that can be used together with a terminal device.

The communication unit 1201 is configured to receive configuration information from the network device, where the configuration information includes first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter.

The processing unit 1202 is configured to demodulate the first signal based on the configuration information, or generate the first signal based on the configuration information.

In a possible implementation, the guard interval configuration manner of the first signal is a first guard interval configuration manner, the first signal includes a first symbol and a second symbol, the first symbol is a symbol immediately preceding the second symbol, and the second symbol includes a ZH signal and/or a ZT signal. In the first guard interval configuration manner, a first parameter corresponding to the second symbol indicates a quantity of zero data of the ZH signal and/or the ZT signal in the second symbol.

In a possible implementation, the first signal further includes a third symbol, the third symbol is a symbol immediately preceding the first symbol, the third symbol includes a ZH signal, and a tail signal in the third symbol is replaced with a component signal in the first symbol. In the first guard interval configuration manner, a first parameter corresponding to the third symbol indicates a quantity of zero data of the ZH signal in the third symbol.

In a possible implementation, the first symbol is any one of the following symbols: a DMRS, a CSI-RS, a PDCCH, a PUCCH, an SRS, an SSB, and URLLC.

In a possible implementation, the guard interval configuration manner of the first signal is a second guard interval configuration manner, each symbol in the first signal includes a first replication block and a second replication block, the first signal includes a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal. An end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol. In the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

In a possible implementation, the first signal includes a sixth symbol and a seventh symbol, the sixth symbol is a symbol immediately preceding the seventh symbol, and the sixth symbol is a 1^{st} symbol in the first signal. An end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol. In the second guard interval configuration manner, if the second replication block of the sixth symbol is a zero signal, a first parameter corresponding to the sixth symbol indicates a quantity of zero data of the first replication block and the second replication block of the sixth symbol.

In a possible implementation, the sixth symbol further includes a ZH signal, and the first parameter corresponding to the sixth symbol further indicates a quantity of zero data of the ZH signal in the sixth symbol.

In a possible implementation, the first signal includes an eighth symbol and a ninth symbol, the eighth symbol is a symbol immediately preceding the ninth symbol, and the ninth symbol is a last symbol in the first signal. An end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol. In the second guard interval configuration manner, if the first replication block of the ninth symbol is a zero signal, a first parameter corresponding to the ninth symbol indicates a quantity of zero data of the first replication block and the second replication block of the ninth symbol.

In a possible implementation, the ninth symbol further includes a ZH signal and/or a ZT signal, and the first parameter corresponding to the ninth symbol further indicates a quantity of zero data of the ZH signal and/or the ZT signal in the ninth symbol.

In a possible implementation, the guard interval configuration manner of the first signal is a third guard interval configuration manner, a tenth symbol is any symbol in the first signal, the tenth symbol includes a tail UW signal, and an end position of the tail UW signal in the tenth symbol is an end position of the tenth symbol. In the third guard interval configuration manner, if the tail UW signal is a zero signal, a first parameter corresponding to the tenth symbol indicates a quantity of zero data of the tail UW signal in the tenth symbol.

In a possible implementation, the tenth symbol further includes a head UW signal, and a start position of the head UW signal in the tenth symbol is a start position of the tenth symbol. If the head UW signal is a zero signal, the first parameter corresponding to the tenth symbol further indicates a quantity of zero data of the head UW signal in the tenth symbol.

In a possible implementation, when generating the first signal based on the configuration information, the processing unit 1202 is specifically configured to: process, based on the first parameter, first data corresponding to the symbol, to obtain second data corresponding to the symbol, where the first data is input data of discrete Fourier transform DFT, and the second data is output data of DFT; and process the second data corresponding to the symbol, to obtain the first signal, where the symbol includes a second symbol and/or a third symbol; or the symbol includes one or more of the following symbols: a fourth symbol, a fifth symbol, a sixth symbol, and a ninth symbol; or the symbol includes a tenth symbol.

In a possible implementation, when demodulating the first signal based on the configuration information, the processing unit 1202 is specifically configured to: process the first signal to obtain second data corresponding to the symbol, where the second data is output data of DFT; and process, based on the first parameter, the second data corresponding to the symbol, to obtain first data corresponding to the symbol, where the first data is input data of DFT, and the symbol includes a second symbol and/or a third symbol; or the symbol includes one or more of the following symbols: a fourth symbol, a fifth symbol, a sixth symbol, and a ninth symbol; or the symbol includes a tenth symbol.

In a possible implementation, the amplitude scale factor of the first data is $\sqrt{\frac{M}{M - {N}_{0}}}$, where *M* is the size of DFT, and *N*₀ is the first parameter corresponding to the symbol.

In an implementation, the communication apparatus 1200 may be a network device, or may be an apparatus in a network device, or may be an apparatus that can be used together with a network device.

The communication unit 1201 is configured to send configuration information to the terminal device, where the configuration information includes first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter.

The communication unit 1201 is further configured to receive a first signal from the terminal device, where the first signal is generated based on the configuration information.

In a possible implementation, the guard interval configuration manner of the first signal is a first guard interval configuration manner, the first signal includes a first symbol and a second symbol, the first symbol is a symbol immediately preceding the second symbol, and the second symbol includes a ZH signal and/or a ZT signal. In the first guard interval configuration manner, a first parameter corresponding to the second symbol indicates a quantity of zero data of the ZH signal and/or the ZT signal in the second symbol.

In a possible implementation, the first signal further includes a third symbol, the third symbol is a symbol immediately preceding the first symbol, the third symbol includes a ZH signal, and a tail signal in the third symbol is replaced with a component signal in the first symbol. In the first guard interval configuration manner, a first parameter corresponding to the third symbol indicates a quantity of zero data of the ZH signal in the third symbol.

In a possible implementation, the first symbol is any one of the following symbols: a DMRS, a CSI-RS, a PDCCH, a PUCCH, an SRS, an SSB, and URLLC.

In a possible implementation, the guard interval configuration manner of the first signal is a second guard interval configuration manner, each symbol in the first signal includes a first replication block and a second replication block, the first signal includes a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal. An end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol. In the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

In a possible implementation, the first signal includes a sixth symbol and a seventh symbol, the sixth symbol is a symbol immediately preceding the seventh symbol, and the sixth symbol is a 1^{st} symbol in the first signal. An end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol. In the second guard interval configuration manner, if the second replication block of the sixth symbol is a zero signal, a first parameter corresponding to the sixth symbol indicates a quantity of zero data of the first replication block and the second replication block of the sixth symbol.

In a possible implementation, the sixth symbol further includes a ZH signal, and the first parameter corresponding to the sixth symbol further indicates a quantity of zero data of the ZH signal in the sixth symbol.

In a possible implementation, the first signal includes an eighth symbol and a ninth symbol, the eighth symbol is a symbol immediately preceding the ninth symbol, and the ninth symbol is a last symbol in the first signal. An end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol. In the second guard interval configuration manner, if the first replication block of the ninth symbol is a zero signal, a first parameter corresponding to the ninth symbol indicates a quantity of zero data of the first replication block and the second replication block of the ninth symbol.

In a possible implementation, the ninth symbol further includes a ZH signal and/or a ZT signal, and the first parameter corresponding to the ninth symbol further indicates a quantity of zero data of the ZH signal and/or the ZT signal in the ninth symbol.

In a possible implementation, the guard interval configuration manner of the first signal is a third guard interval configuration manner, a tenth symbol is any symbol in the first signal, the tenth symbol includes a tail UW signal, and an end position of the tail UW signal in the tenth symbol is an end position of the tenth symbol. In the third guard interval configuration manner, if the tail UW signal is a zero signal, a first parameter corresponding to the tenth symbol indicates a quantity of zero data of the tail UW signal in the tenth symbol.

In a possible implementation, the tenth symbol further includes a head UW signal, and a start position of the head UW signal in the tenth symbol is a start position of the tenth symbol. If the head UW signal is a zero signal, the first parameter corresponding to the tenth symbol further indicates a quantity of zero data of the head UW signal in the tenth symbol.

In a possible implementation, the processing unit 1202 is configured to: process the first signal to obtain second data corresponding to the symbol, where the second data is output data of discrete Fourier transform DFT; and process, based on the first parameter, the second data corresponding to the symbol, to obtain first data corresponding to the symbol, where the first data is input data of DFT, and the symbol includes a second symbol and/or a third symbol; or the symbol includes one or more of the following symbols: a fourth symbol, a fifth symbol, a sixth symbol, and a ninth symbol; or the symbol includes a tenth symbol.

In a possible implementation, the amplitude scale factor of the first data is $\sqrt{\frac{M}{M - {N}_{0}}}$, where *M* is the size of DFT, and *N*₀ is the first parameter corresponding to the symbol.

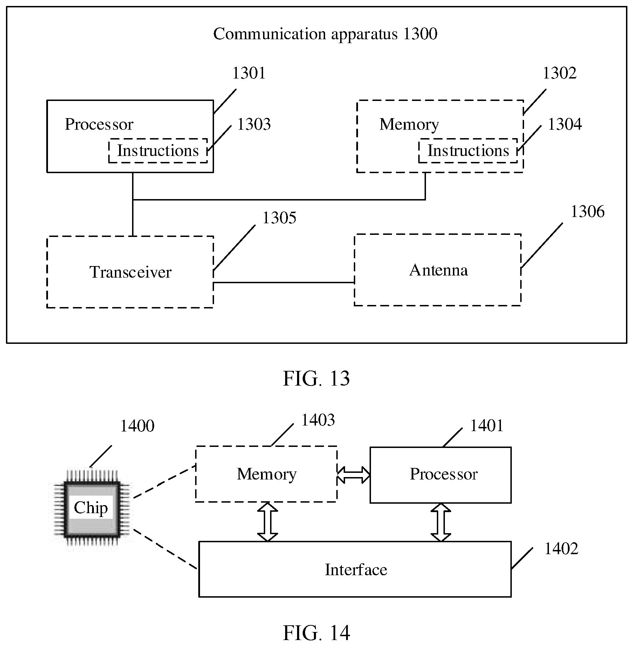

FIG. 13 is a diagram of a structure of another communication apparatus. A communication apparatus 1300 may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus 1300 may include one or more processors 1301. The processor 1301 may be a general-purpose processor, a dedicated processor, or the like, for example, may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1300 may include one or more memories 1302. The memory may store instructions 1304, and the instructions may be run on the processor 1301, so that the communication apparatus 1300 performs the methods described in the foregoing method embodiments. Optionally, the memory 1302 may further store data. The processor 1301 and the memory 1302 may be separately disposed, or may be integrated together.

Optionally, the communication apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1202 shown in FIG. 12 may be the processor 1301. The communication unit 1201 may be the transceiver 1305.

In another possible design, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1301 may store instructions 1303, and the instructions 1303 are run on the processor 1301, to cause the communication apparatus 1300 to perform the method described in the foregoing method embodiments. The instructions 1303 may be fixed in the processor 1301. In this case, the processor 1301 may be implemented by hardware.

In still another possible design, the communication apparatus 1300 may include a circuit, and the circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device or a network device. However, a scope of the communication apparatus described in embodiments of this application is not limited thereto, and the structure of the communication apparatus may not be limited by FIG. 13. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 14. A chip 1400 shown in FIG. 14 includes a processor 1401 and an interface 1402. Optionally, the chip may further include a memory 1403. There may be one or more processors 1401, and there may be a plurality of communication interfaces 1402.

A case in which the chip is configured to implement the terminal device or the network device in embodiments of this application is described below.

The interface 1402 is configured to receive or output a signal.

The processor 1401 is configured to perform a data processing operation of the terminal device or the network device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program or the instructions are executed by a communication apparatus, a function in any one of the foregoing method embodiments is implemented.

This application further provides a computer program product including instructions. When a computer reads and executes the computer program product, the computer is caused to implement a function in any one of the foregoing method embodiments.

This application provides a communication system. The communication system includes a terminal device and a network device. The terminal device is configured to perform the method performed by the terminal device in the foregoing embodiments, and the network device is configured to perform the method performed by the network device in the foregoing embodiments.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-dense digital video disc (digital video disc, DVD)), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A configuration method, wherein the method comprises:
receiving configuration information from a network device, wherein the configuration information comprises first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter; and
demodulating the first signal based on the configuration information, or generating the first signal based on the configuration information.

2. The method according to claim 1, wherein the guard interval configuration manner of the first signal is a first guard interval configuration manner, the first signal comprises a first symbol and a second symbol, the first symbol is a symbol immediately preceding the second symbol, and the second symbol comprises a zero head ZH signal and/or a zero tail ZT signal; and
in the first guard interval configuration manner, a first parameter corresponding to the second symbol indicates a quantity of zero data of the ZH signal and/or the ZT signal in the second symbol.

3. The method according to claim 2, wherein the first signal further comprises a third symbol, the third symbol is a symbol immediately preceding the first symbol, the third symbol comprises a ZH signal, and a tail signal in the third symbol is replaced with a component signal in the first symbol; and
in the first guard interval configuration manner, a first parameter corresponding to the third symbol indicates a quantity of zero data of the ZH signal in the third symbol.

4. The method according to claim 2 or 3, wherein the first symbol is any one of the following symbols: demodulation reference signal DMRS, channel state information-reference signal CSI-RS, physical downlink control channel PDCCH, physical uplink control channel PUCCH, channel sounding reference signal SRS, synchronization signal block SSB, and ultra-reliable low-latency communication URLLC.

5. The method according to claim 1, wherein the guard interval configuration manner of the first signal is a second guard interval configuration manner, each symbol in the first signal comprises a first replication block and a second replication block, the first signal comprises a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal;
an end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol; and
in the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

6. The method according to claim 5, wherein the first signal comprises a sixth symbol and a seventh symbol, the sixth symbol is a symbol immediately preceding the seventh symbol, and the sixth symbol is the 1^{st} symbol in the first signal;
an end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol; and
in the second guard interval configuration manner, if the second replication block of the sixth symbol is a zero signal, a first parameter corresponding to the sixth symbol indicates a quantity of zero data of the first replication block and the second replication block of the sixth symbol.

7. The method according to claim 6, wherein the sixth symbol further comprises a zero head ZH signal; and
the first parameter corresponding to the sixth symbol further indicates a quantity of zero data of the ZH signal in the sixth symbol.

8. The method according to any one of claims 5 to 7, wherein the first signal comprises an eighth symbol and a ninth symbol, the eighth symbol is a symbol immediately preceding the ninth symbol, and the ninth symbol is the last symbol in the first signal;
an end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol; and
in the second guard interval configuration manner, if the first replication block of the ninth symbol is a zero signal, a first parameter corresponding to the ninth symbol indicates a quantity of zero data of the first replication block and the second replication block of the ninth symbol.

9. The method according to claim 8, wherein the ninth symbol further comprises a zero head ZH signal and/or a zero tail ZT signal; and
the first parameter corresponding to the ninth symbol further indicates a quantity of zero data of the ZH signal and/or the ZT signal in the ninth symbol.

10. The method according to claim 1, wherein the guard interval configuration manner of the first signal is a third guard interval configuration manner, a tenth symbol is any symbol in the first signal, the tenth symbol comprises a tail unique word UW signal, and an end position of the tail UW signal in the tenth symbol is an end position of the tenth symbol; and
in the third guard interval configuration manner, if the tail UW signal is a zero signal, a first parameter corresponding to the tenth symbol indicates a quantity of zero data of the tail UW signal in the tenth symbol.

11. The method according to claim 10, wherein the tenth symbol further comprises a head UW signal, and a start position of the head UW signal in the tenth symbol is a start position of the tenth symbol; and
if the head UW signal is a zero signal, the first parameter corresponding to the tenth symbol further indicates a quantity of zero data of the head UW signal in the tenth symbol.

12. The method according to any one of claims 2 to 11, wherein generating the first signal based on the configuration information comprises:
processing, based on the first parameter, first data corresponding to the symbol, to obtain second data corresponding to the symbol, wherein the first data is input data of discrete Fourier transform DFT, and the second data is output data of DFT; and
processing the second data corresponding to the symbol, to obtain the first signal, wherein
the symbol comprises the second symbol and/or the third symbol; or
the symbol comprises one or more of the following symbols: the fourth symbol, the fifth symbol, the sixth symbol, and the ninth symbol; or
the symbol comprises the tenth symbol.

13. The method according to any one of claims 2 to 11, wherein demodulating the first signal based on the configuration information comprises:
processing the first signal to obtain second data corresponding to the symbol, wherein the second data is output data of discrete Fourier transform DFT; and
processing, based on the first parameter, the second data corresponding to the symbol, to obtain first data corresponding to the symbol, wherein the first data is input data of DFT, wherein
the symbol comprises the second symbol and/or the third symbol; or
the symbol comprises one or more of the following symbols: the fourth symbol, the fifth symbol, the sixth symbol, and the ninth symbol; or
the symbol comprises the tenth symbol.

14. The method according to claim 12, wherein an amplitude scale factor of the first data is $\sqrt{\frac{M}{M - {N}_{0}}}$, wherein *M* is a size of discrete Fourier transform DFT, and *N*₀ is the first parameter corresponding to the symbol.

15. A configuration method, wherein the method comprises:
sending configuration information to a terminal device, wherein the configuration information comprises first indication information and a first parameter that corresponds to a symbol in a first signal, the first indication information indicates a guard interval configuration manner of the first signal, the first parameter indicates a quantity of zero data in a component signal, and the component signal is located in the symbol corresponding to the first parameter; and
receiving the first signal from the terminal device, wherein the first signal is generated based on the configuration information.

16. The method according to claim 15, wherein the guard interval configuration manner of the first signal is a first guard interval configuration manner, the first signal comprises a first symbol and a second symbol, the first symbol is a symbol immediately preceding the second symbol, and the second symbol comprises a zero head ZH signal and/or a zero tail ZT signal; and
in the first guard interval configuration manner, a first parameter corresponding to the second symbol indicates a quantity of zero data of the ZH signal and/or the ZT signal in the second symbol.

17. The method according to claim 16, wherein the first signal further comprises a third symbol, the third symbol is a symbol immediately preceding the first symbol, the third symbol comprises a ZH signal, and a tail signal in the third symbol is replaced with a component signal in the first symbol; and
in the first guard interval configuration manner, a first parameter corresponding to the third symbol indicates a quantity of zero data of the ZH signal in the third symbol.

18. The method according to claim 16 or 17, wherein the first symbol is any one of the following symbols: demodulation reference signal DMRS, channel state information-reference signal CSI-RS, physical downlink control channel PDCCH, physical uplink control channel PUCCH, channel sounding reference signal SRS, synchronization signal block SSB, and ultra-reliable low-latency communication URLLC.

19. The method according to claim 15, wherein the guard interval configuration manner of the first signal is a second guard interval configuration manner, each symbol in the first signal comprises a first replication block and a second replication block, the first signal comprises a fourth symbol and a fifth symbol, the fourth symbol is a symbol immediately preceding the fifth symbol, the fourth symbol is a symbol other than a 1^{st} symbol in the first signal, and the fifth symbol is a symbol other than a last symbol in the first signal;
an end position of the first replication block of the fourth symbol is a cyclic prefix CP truncation point of the fourth symbol, an end position of the second replication block of the fourth symbol is an end position of the fourth symbol, an end position of the first replication block of the fifth symbol is a CP truncation point of the fifth symbol, an end position of the second replication block of the fifth symbol is an end position of the fifth symbol, and data of the second replication block of the fourth symbol is the same as data of the first replication block of the fifth symbol; and
in the second guard interval configuration manner, if the first replication block of the fourth symbol is a zero signal and the second replication block of the fifth symbol is a zero signal, a first parameter corresponding to the fourth symbol indicates a quantity of zero data of the first replication block and the second replication block of the fourth symbol, and a first parameter corresponding to the fifth symbol indicates a quantity of zero data of the first replication block and the second replication block of the fifth symbol.

20. The method according to claim 19, wherein the first signal comprises a sixth symbol and a seventh symbol, the sixth symbol is a symbol immediately preceding the seventh symbol, and the sixth symbol is the 1^{st} symbol in the first signal;
an end position of the first replication block of the sixth symbol is a CP truncation point of the sixth symbol, an end position of the second replication block of the sixth symbol is an end position of the sixth symbol, an end position of the first replication block of the seventh symbol is a CP truncation point of the seventh symbol, an end position of the second replication block of the seventh symbol is an end position of the seventh symbol, and data of the second replication block of the sixth symbol is the same as data of the first replication block of the seventh symbol; and
in the second guard interval configuration manner, if the second replication block of the sixth symbol is a zero signal, a first parameter corresponding to the sixth symbol indicates a quantity of zero data of the first replication block and the second replication block of the sixth symbol.

21. The method according to claim 20, wherein the sixth symbol further comprises a zero head ZH signal; and
the first parameter corresponding to the sixth symbol further indicates a quantity of zero data of the ZH signal in the sixth symbol.

22. The method according to any one of claims 19 to 21, wherein the first signal comprises an eighth symbol and a ninth symbol, the eighth symbol is a symbol immediately preceding the ninth symbol, and the ninth symbol is the last symbol in the first signal;
an end position of the first replication block of the eighth symbol is a CP truncation point of the eighth symbol, an end position of the second replication block of the eighth symbol is an end position of the eighth symbol, an end position of the first replication block of the ninth symbol is a CP truncation point of the ninth symbol, an end position of the second replication block of the ninth symbol is an end position of the ninth symbol, and data of the second replication block of the eighth symbol is the same as data of the first replication block of the ninth symbol; and
in the second guard interval configuration manner, if the first replication block of the ninth symbol is a zero signal, a first parameter corresponding to the ninth symbol indicates a quantity of zero data of the first replication block and the second replication block of the ninth symbol.

23. The method according to claim 22, wherein the ninth symbol further comprises a zero head ZH signal and/or a zero tail ZT signal; and
the first parameter corresponding to the ninth symbol further indicates a quantity of zero data of the ZH signal and/or the ZT signal in the ninth symbol.

24. The method according to claim 15, wherein the guard interval configuration manner of the first signal is a third guard interval configuration manner, a tenth symbol is any symbol in the first signal, the tenth symbol comprises a tail unique word UW signal, and an end position of the tail UW signal in the tenth symbol is an end position of the tenth symbol; and
in the third guard interval configuration manner, if the tail UW signal is a zero signal, a first parameter corresponding to the tenth symbol indicates a quantity of zero data of the tail UW signal in the tenth symbol.

25. The method according to claim 24, wherein the tenth symbol further comprises a head UW signal, and a start position of the head UW signal in the tenth symbol is a start position of the tenth symbol; and
if the head UW signal is a zero signal, the first parameter corresponding to the tenth symbol further indicates a quantity of zero data of the head UW signal in the tenth symbol.

26. The method according to any one of claims 16 to 25, wherein the method further comprises:
processing the first signal to obtain second data corresponding to the symbol, wherein the second data is output data of discrete Fourier transform DFT; and
processing, based on the first parameter, the second data corresponding to the symbol, to obtain first data corresponding to the symbol, wherein the first data is input data of DFT, wherein
the symbol comprises the second symbol and/or the third symbol; or
the symbol comprises one or more of the following symbols: the fourth symbol, the fifth symbol, the sixth symbol, and the ninth symbol; or
the symbol comprises the tenth symbol.

27. The method according to claim 26, wherein an amplitude scale factor of the first data is $\sqrt{\frac{M}{M - {N}_{0}}}$*,* wherein *M* is a size of discrete Fourier transform DFT, and *N*₀
*N*₀ is the first parameter corresponding to the symbol.

28. A communication system, comprising a terminal device and a network device, wherein the terminal device is configured to perform the method according to any one of claims 1 to 14, and the network device is configured to perform the method according to any one of claims 15 to 27.

29. A communication apparatus, comprising a unit configured to perform the method according to any one of claims 1 to 14, or comprising a unit configured to perform the method according to any one of claims 15 to 27.

30. A communication apparatus, comprising a processor and a memory, wherein the processor is coupled to the memory, and the processor is configured to implement the method according to any one of claims 1 to 14, or the processor is configured to implement the method according to any one of claims 15 to 27.

31. A chip, comprising a processor and an interface, wherein the processor is coupled to the interface, the interface is configured to receive or output a signal, and the processor is configured to execute code instructions, to perform the method according to any one of claims 1 to 14, or to perform the method according to any one of claims 15 to 27.

32. A computer-readable storage medium, wherein the computer-readable storage medium stores computer-executable instructions, and when the computer-executable instructions are invoked by a computer, the computer is caused to perform the method according to any one of claims 1 to 14, or the computer is caused to perform the method according to any one of claims 15 to 27.
